# EUROPEAN PATENT APPLICATION

(11) **EP 3 572 923 A1**
(43) Date of publication of application: **27.11.2019**
(21) Application number: 19167002.5
(22) Date of filing: 03.04.2019
(51) Int. Cl.: G06F 3/06, G06F 16/174

(54) **INFORMATION PROCESSING SYSTEM, INFORMATION PROCESSING APPARATUS, AND COMPUTER PROGRAM**

(30) Priority: 23.05.2018 JP 2018098865
(71) Applicant: FUJITSU LIMITED, Kanagawa 211-8588 (JP)
(72) Inventor: Uno, Tomohiro, Kanagawa, 211-8588 (JP); Kuwayama, Takashi, Kanagawa, 211-8588 (JP); Takeuchi, Masaki, Kanagawa, 211-8588 (JP); Wen, Tianyue, Kanagawa, 211-8588 (JP)
(74) Representative: Hoffmann Eitle

(57) **Abstract**

In an information processing system, a first information processing apparatus records, each time a file is updated, attribute information of the updated file and map information indicating updated chunks of the updated file, so as to create a change log indicating updates of a plurality of files, and then sets information indicating a generation for the change log. The first information processing apparatus sends the change log to a management apparatus connected to a storage device. A second processing apparatus obtains the change log from the management apparatus, and recognizes the plurality of files updated, with reference to the change log in order of generation.

## Description

### FIELD

The embodiments discussed herein relate to an information processing system, an information processing apparatus, and a computer program.

### BACKGROUND

In the fields of information processing, there have been used systems that provide file sharing services using computers connected over a network. For example, there has been proposed a computer system that has a client computer display a history of objects such as files and directories. The proposed computer system limits snapshot generations to which objects to be restored for displaying the object history belong, to snapshot generations satisfying a prescribed policy among all managed snapshot generations, thereby reducing the number of objects to be restored.

Further, there has also been a proposal in which, at the time of data restoration, a NAS (network attached storage) device displays a list associating an ID (identifier) of a generation with update times of target files belonging to the generation, in order to enable a user to recognize the update times of the target files.

Still further, there has also been proposed a file system in which a CAS (content addressed storage) device creates, as an update list, a list of a file group that a first sub-computer system has archived or backed up in a data center, and sends the update list to a second sub-computer system. The second sub-computer system determines whether a file is valid, with reference to the update list, thereby making it possible to reduce the response time in file synchronization processing among sites.

Please see, for example, International Publication Pamphlet No. WO 2017/122313;
Japanese Laid-open Patent Publication NO. 2010-49488; and
International Publication Pamphlet No. WO 2012/137262.

There have been considered systems that enable sharing a plurality of files stored in a storage device among a plurality of information processing apparatuses. In such a system, each file is divided into units called chunks, which are then deduplicated and stored in the storage device. By doing so, this system reduces the number of duplicates in the stored chunks constituting the files and thereby saves the space of the storage device.

The system uses meta-information that associates a file with a plurality of chunks constituting the file. An information processing apparatus that refers to the file uses the meta-information to identify the file and the chunks associated with the file. In this case, the information processing apparatus recognizes updates of the file on the basis of the meta-information. For example, when a certain information processing apparatus updates a file, another information processing apparatus obtains meta-information indicating the updated file from a management apparatus connected to the storage device and recognizes chunks associated with the updated file.

This system has the following problem: When a certain information processing apparatus updates a plurality of files, another information processing apparatus obtains the meta-information of the plurality of files separately, which increases the number of operations involved in the acquisition of the meta-information.

### SUMMARY

According to one aspect, the present invention intends to provide an information processing system, information processing apparatus, and computer program that are able to reduce the number of operations.

According to one aspect, there is provided an information processing system for dividing a plurality of files into chunks, deduplicating the chunks, and storing the deduplicated chunks in a storage device. The information processing system includes: a first information processing apparatus configured to record, each time a file is updated, attribute information of the updated file and map information indicating an updated chunk of the updated file, so as to create a change log indicating updates of the plurality of files, set information indicating a generation for the change log, and send the change log to a management apparatus connected to the storage device; and a second information processing apparatus configured to obtain the change log from the management apparatus, and recognize the plurality of files updated, with reference to the change log in order of generation.

### BRIEF DESCRIPTION OF DRAWINGS

FIG. 1 illustrates an information processing system according to a first embodiment;
FIG. 2 illustrates an example of a change log;
FIG. 3 illustrates another processing example in the information processing system;
FIG. 4 illustrates an example of an information processing system according to a second embodiment;
FIG. 5 is a block diagram illustrating an example of a hardware configuration of an update server;
FIG. 6 illustrates an example of deduplication;
FIG. 7 illustrates an example of access to object storage;
FIG. 8 illustrates an example of relationship between an update site and a referencing site;
FIG. 9 illustrates an example of functions of the information processing system;
FIG. 10 illustrates an example of a data structure for file management;
FIG. 11 illustrates an example of a data structure of a change log;
FIG. 12 illustrates an example of uploading a change log;
FIG. 13 illustrates an example of downloading a change log;
FIG. 14 is a flowchart illustrating an example of creating a change log;
FIG. 15 is a flowchart illustrating an example of a file update process;
FIG. 16 is a flowchart illustrating an example of deleting a change log;
FIG. 17 illustrates an example of the reference count of a chunk;
FIG. 18 is a flowchart illustrating an example of updating a file system;
FIG. 19 illustrates a first example of reducing the number of operations;
FIG. 20 is a second example of reducing the number of operations;
FIG. 21 illustrates an example of chunk maps included in change logs;
FIG. 22 is a flowchart illustrating an example of restoration; and
FIG. 23 illustrates an example of file operations and restoration.

### DESCRIPTION OF EMBODIMENTS

Hereinafter, preferred embodiments will now be described with reference to the accompanying drawings.

### (First Embodiment)

A first embodiment will be described.

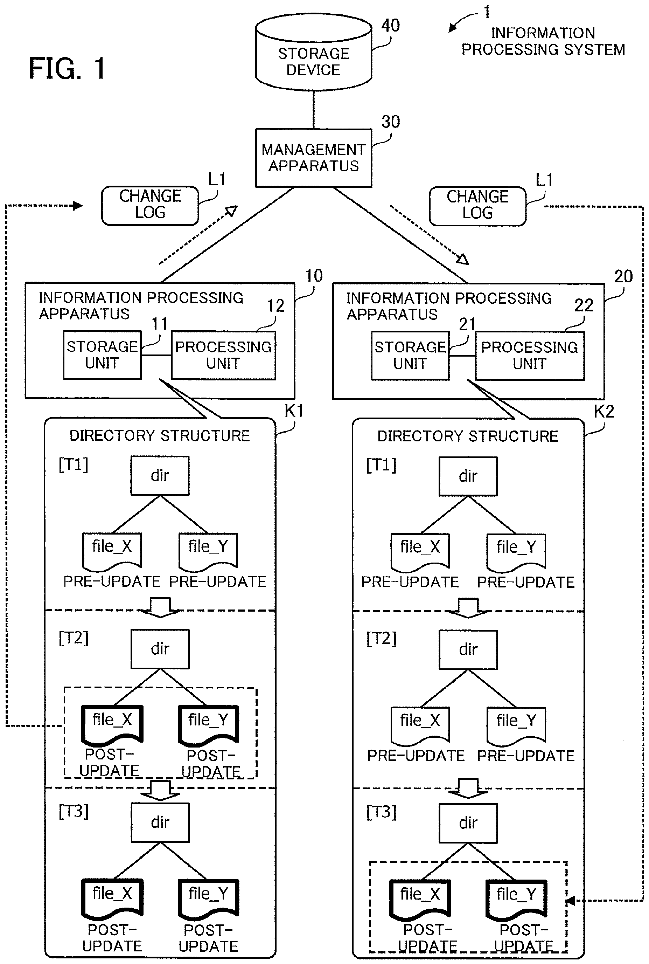

FIG. 1 illustrates an information processing system according to the first embodiment. The information processing system 1 includes information processing apparatuses 10 and 20, a management apparatus 30, and a storage device 40. The information processing system 1 enables sharing files stored in the storage device 40 between the information processing apparatuses 10 and 20. The information processing system 1 divides a plurality of files into chunks, deduplicates the chunks, and stores the deduplicated chunks in the storage device 40. The management apparatus 30 manages meta-information that associates each file with chunks constituting the file, and provides the meta-information for the information processing apparatuses 10 and 20. For example, such chunks and meta-information are managed in data units called objects.

In the information processing system 1, the information processing apparatus 10 updates files and meta-information for the updated files. In addition, the information processing apparatus 10 sends the chunks and meta-information of the updated files to the management apparatus 30. The management apparatus 30 receives the chunks and meta-information of the updated files and stores them in the storage device 40.

In addition, in the information processing system 1, the information processing apparatuses 10 and 20 are able to refer to files stored in the storage device 40. The information processing apparatuses 10 and 20 obtain meta-information stored in the storage device 40 via the management apparatus 30, recognize files on the basis of the meta-information, and obtain chunks constituting the files from the storage device 40 via the management apparatus 30.

Consider that the information processing apparatus 10 in the information processing system 1 updates a plurality of files. If the information processing apparatus 20 obtains meta-information corresponding to each updated file separately, the information processing apparatus 20 needs to perform many operations on the management apparatus 30. In view of this, the information processing system 1 provides a function that enables an information processing apparatus at a referencing side (for example, information processing apparatus 20) to efficiently recognize each of the updated files.

The information processing apparatus 10 includes a storage unit 11 and a processing unit 12. The information processing apparatus 20 includes a storage unit 21 and a processing unit 22. The storage units 11 and 21 may be volatile storage devices, such as RAMs (random access memories), or non-volatile storage devices, such as HDDs (hard disk drives) or flash memories. The processing units 12 and 22 may include a CPU (central processing unit), a DSP (digital signal processor), an ASIC (application-specific integrated circuit), an FPGA (field programmable gate array), or others. The processing units 12 and 22 may be processors that execute programs. The "processor" here may be a set of multiple processors (multiprocessor).

The storage unit 11 stores therein a change log L1 indicating updates of a plurality of files. The change log L1 includes attribute information of the updated files and map information indicating the updated chunks of the files. The updates of files may include creation of new files, updates of existing files, and deletion of existing files. Such creation of new files, updates of existing files, and deletion of existing files are collectively referred to as file operations.

For example, the attribute information of a file includes the identification information (inode number, file name, or the like) of the file, and information indicating the attributes of the file, such as a parent directory name, an update date and time, and size. The map information of a file indicates chunks corresponding to an updated portion of the file. In the case where a new file is created, its map information includes information indicating all chunks constituting the created file. In the case where an existing file is updated, its map information includes only information indicating chunks corresponding to an updated portion of the updated file but does not include information about chunks corresponding to a non-updated portion. In the case where an existing file is deleted, its map information includes information indicating all chunks constituting the deleted file. Each chunk is associated with a reference count indicating how many files refer to the chunk. For example, a chunk is deleted from the storage device 40 when its reference count becomes zero.

When a file is updated, the processing unit 12 creates the change log L1 by recording the attribute information of the updated file and the map information indicating the updated chunks of the updated file, and stores the change log L1 in the storage unit 11. Files to be updated are files that are stored in the storage device 40 and shared by the information processing apparatuses 10 and 20. The processing unit 12 sets information indicating a generation for the change log L1. The processing unit 12 sends the change log L1 to a management apparatus connected to the storage device 40. For example, the processing unit 12 records updates of a plurality of files in the change log L1 during a prescribed period of time, and then sends the change log L1 to the management apparatus 30 when the prescribed period of time has passed. After that, the processing unit 12 starts to create a change log of a generation next to that of the change log L1. In this connection, the processing unit 12 may be designed to record the change log L1 and send it to the management apparatus 30 at prescribed periodic intervals. Alternatively, the processing unit 12 may be designed to record and send such a change log, at the time of the size of the change log L1 reaching a prescribed size or at another timing.

The storage unit 21 stores therein the change log L1 received from the management apparatus 30.

The processing unit 22 obtains the change log L1 from the management apparatus 30 and stores it in the storage unit 21. The processing unit 22 may obtain the change log L1 from the management apparatus 30, at intervals at which the information processing apparatus 10 sends the change log L1 to the management apparatus 30 or when the information processing apparatus 20 receives an instruction to obtain the change log L1 from the management apparatus 30.

The processing unit 22 recognizes a plurality of updated files, with reference to the change log L1 in order of generation. For example, when the processing unit 22 has obtained a change log of a generation previous to that of the change log L1, the processing unit 22 refers to the change log of the previous generation first and then refers to the change log L1. In addition, when the processing unit 22 obtains a change log of a generation next to that of the change log L1, the processing unit 22 refers to the change log L1 first and then refers to the change log of the next generation. This is because the map information in each change log includes information indicating chunks corresponding to updated portions of updated files but does not include information indicating chunks corresponding to non-updated portions. In the case where a file is updated plural times over plural generations, the processing unit 22 refers to the corresponding change logs in order of generation, so as to correctly specify chunks constituting the file. In addition, to exclude information indicating chunks corresponding to non-updated portions from change logs has an advantage of minimizing the size of the change logs.

The following exemplifies files that are recognized by the information processing apparatuses 10 and 20 and describes a processing example in the information processing system 1. A directory structure K1 is an example of the structure (tree structure) of a directory and files that are recognized by a file system of the information processing apparatus 10. A directory structure K2 is an example of the structure (tree structure) of a directory and files that are recognized by a file system of the information processing apparatus 20. For example, the file systems of the information processing apparatuses 10 and 20 recognize the respective directory structures K1 and K2 with reference to the attribute information of each of the directory and files. The following description assumes that a letter "T" indicates time and that a higher number following the letter "T" indicates more recent time.

At time T1, the directory structures K1 and K2 are identical. More specifically, the directory structures K1 and K2 include a file "file_X" and a file "file_Y" subordinate to a directory "dir." In FIG. 1, a term "pre-update" or "post-update" is given below the icon of each file to distinguish "pre-update file" and "updated file" from each other.

At time T2, the processing unit 12 updates the file "file_X" and the file "file_Y." Then, the processing unit 12 records the attribute information of each file and map information indicating chunks corresponding to an updated portion of each file in the change log L1. The processing unit 12 sends the meta-information of each file and the chunks corresponding to the updated portion of each file to the management apparatus 30. In the directory structure K1 at this stage, the updated file "file_X" and the updated file "file_Y" are recognized as being subordinate to the directory "dir." The processing unit 12 sends the created change log L1 to the management apparatus 30. In this connection, the processing unit 12 is able to send the meta-information of each file and the chunks corresponding to the updated portion of each file, asynchronously with the sending of the change log L1. In the directory structure K2 at this stage, the pre-update file "file_X" and pre-update file "file_Y" are recognized as being subordinate to the directory "dir."

At time T3, the processing unit 22 obtains the change log L1 from the management apparatus 30. The processing unit 22 specifies the updated attribute information of the file "file_X" and the chunks corresponding to the updated portion of the file "file_X" on the basis of the attribute information and map information of the file "file_X" included in the change log L1, and recognizes the updated file "file_X." In addition, the processing unit 22 specifies the updated attribute information of the file "file_Y" and the chunks corresponding to the updated portion of the file "file_Y" on the basis of the attribute information and map information of the file "file_Y" included in the change log L1, and recognizes the updated file "file_Y." In the directory structure K2 at this stage, the updated file "file_X" and the updated file "file_Y" are recognized as being subordinate to the directory "dir," so that the directory structures K1 and K2 are in synchronization with each other.

The following describes an example of the change log L1.

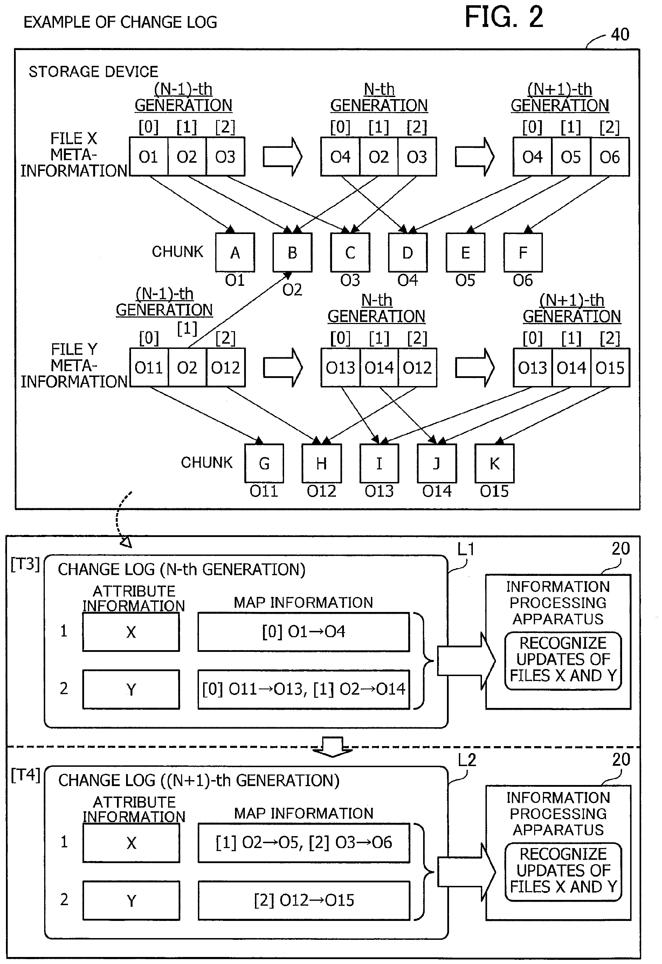

FIG. 2 illustrates an example of a change log.

Assume that the change log L1 is of an N-th generation (N is an integer of one or greater). That is, an (N-1)-th generation is previous to the generation of the change log L1 and an (N+1)-th generation is next to the generation of the change log L1. The files "file_X" and "file _Y" are simply referred to as "file X" and "file Y," respectively. It is also assumed that the files X and Y are each divided into three chunks, for simple explanation. In addition, a value in brackets in this figure indicates an offset position from the beginning of a file.

In the (N-1)-th generation, chunks O1, O2, O3, O11, and O12 are stored in the storage device 40. The chunk O1 is data "A," the chunk O2 is data "B," the chunk O3 is data "C," and the chunk O11 is data "G," and the chunk O12 is data "H."

The meta-information of the file X in the (N-1) -th generation indicates that an offset [0] is for the chunk O1, an offset [1] is for the chunk O2, and an offset [2] is for the chunk O3. In this way, information indicating chunks corresponding to offset positions of a file is managed. To identify a chunk, the identification name (for example, an object name corresponding to the chunk) of the chunk, a pointer pointing to the storage location of the chunk, or the like may be used.

The meta-information of the file Y in the (N-1)-th generation indicates that an offset [0] is for the chunk O11, an offset [1] is for the chunk O2, and an offset [2] is for the chunk O12. In this (N-1)-th generation, portions at the offset [1] of both the files X and Y refer to the chunk O2. Note that in the storage device 40, a duplicate of the chunk O2 has been eliminated (for example, one chunk O2 is stored for the files X and Y) .

The directory structures K1 and K2 at time T1 in the information processing apparatuses 10 and 20 include the files X and Y of the (N-1)-th generation.

In the N-th generation, the processing unit 12 updates the reference destination of a portion at the offset [0] of the file X from the chunk O1 to a chunk O4. The chunk O4 is data "D." In the N-th generation, the processing unit 12 updates the reference destination of a portion at the offset [0] of the file Y from the chunk O11 to a chunk O13. The chunk O13 is data "I." In addition, the processing unit 12 updates the reference destination of a portion at the offset [1] of the file Y from the chunk O2 to a chunk O14. The chunk O14 is data "J."

In this case, the processing unit 12 includes the following information in the change log L1 of the N-th generation.

First information to be included is the attribute information (indicated by "X" in the figure) of the file X and the map information of the file X associated with the attribute information. The map information of the file X indicates that the reference destination of the portion at the offset [0] of the file X has been updated from the chunk O1 to the chunk O4.

Second information to be included is the attribute information (indicated by "Y" in the figure) of the file Y and the map information of the file Y associated with the attribute information. The map information of the file Y indicates that the reference destination of the portion at the offset [0] of the file Y has been updated from the chunk O11 to the chunk O13 and the reference destination of the portion at the offset [1] of the file Y has been updated from the chunk O2 to the chunk O14.

At the aforementioned time T3, the processing unit 22 recognizes the updates of the files X and Y with reference to the attribute information and map information of the files X and Y included in the change log L1, and updates the directory structure K2 accordingly. Thereby, the directory structure K2 becomes synchronized with the directory structure K1.

The following describes a change log L2 of the (N+1)-th generation.

For example, after time T3, the processing unit 12 updates the reference destination of the portion at the offset [1] of the file X from the chunk O2 to a chunk O5. The chunk O5 is data "E." In addition, the processing unit 12 updates the reference destination of the portion at the offset [2] of the file X from the chunk O3 to a chunk O6. The chunk O6 is data "F." Also, the processing unit 12 updates the reference destination of the portion at the offset [2] of the file Y from the chunk O12 to a chunk O15. The chunk O15 is data "K."

In this case, the processing unit 12 includes the following information in the change log L2 of the (N+1)-th generation.

First information to be included is the attribute information of the file X and the map information of the file X associated with the attribute information. The map information of the file X indicates that the reference destination of the portion at the offset [1] of the file X has been updated from the chunk O2 to the chunk O5 and the reference destination of the portion at the offset [2] of the file X has been updated from the chunk O3 to the chunk O6.

Second information to be included is the attribute information of the file Y and the map information of the file Y associated with the attribute information. The map information of the file Y indicates that the reference destination of the portion at the offset [2] of the file Y has been updated from the chunk O12 to the chunk O15. The processing unit 12 sends the change log L2 to the management apparatus 30.

For example, at time T4, the processing unit 22 obtains the change log L2 from the management apparatus 30. The processing unit 22 recognizes the updates of the files X and Y with reference to the attribute information and map information of the files X and Y included in the change log L2, and updates the directory structure K2 accordingly.

Note that, by including information indicating pre-update chunks of a file in map information, as described above, it becomes possible to restore the corresponding portion of the file on the basis of the map information. For example, the processing unit 12 reverts chunks that are reference destinations of updated portions of the files X and Y back to previous ones on the basis of the map information included in the change log L2, so that the files X and Y are restored to the state of the N-th generation. Then, the processing unit 12 reverts chunks that are reference destinations of the updated portions of the files X and Y back to previous ones on the basis of the map information included in the change log L1, so that the files X and Y are restored from the state of the N-th generation to the state of the (N-1)-th generation. In this case, the number of references by the change logs L1 and L2 is counted and included in the reference counts of chunks and is managed.

The above example mainly describes updates of files. The information processing apparatuses 10 and 20 create files and delete files in the following manner.

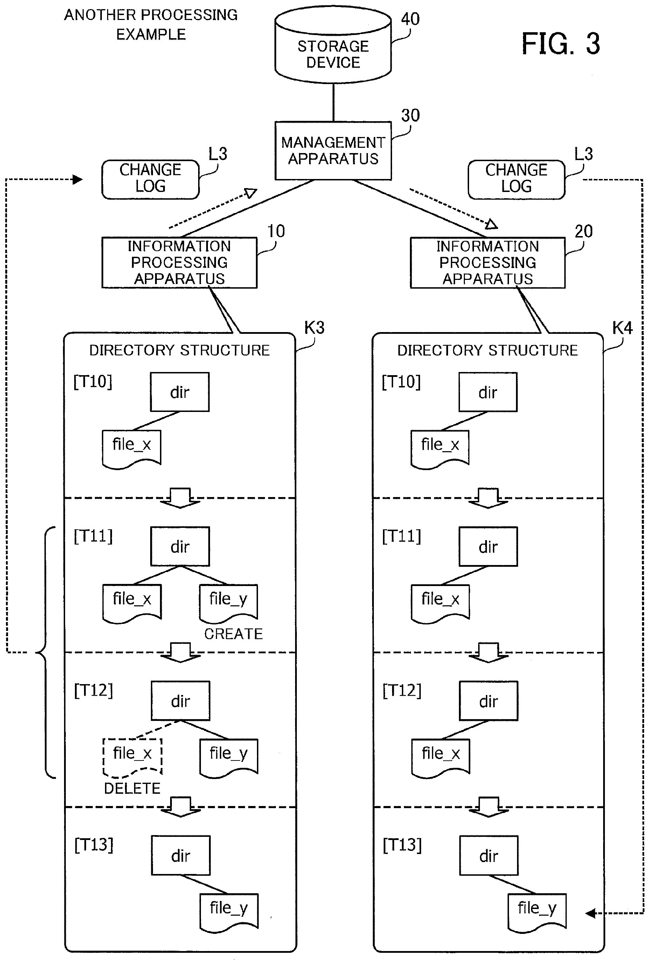

FIG. 3 illustrates another processing example in the information processing system.

A directory structure K3 is another example of the structure of a directory and files that are recognized by the file system of the information processing apparatus 10. A directory structure K4 is another example of the structure of a directory and files that are recognized by the file system of the information processing apparatus 20.

At time T10, the directory structures K3 and K4 are identical. More specifically, the directory structures K3 and K4 include only a file "file_x" subordinate to a directory "dir."

At time T11, the processing unit 12 creates a file "file_y" subordinate to the directory "dir." Then, the processing unit 12 records the attribute information of the file and the map information indicating the chunks of the file in a change log L3. The processing unit 12 sends the meta-information and newly created chunks of the file to the management apparatus 30. In the directory structure K3 at this stage, the file "file_x" and the created file "file_y" are recognized as being subordinate to the directory "dir." On the other hand, only the file "file_x" is recognized as being subordinate to the directory "dir" in the directory structure K4.

At time T12, the processing unit 12 deletes the file "file_x." Then, the processing unit 12 records the attribute information of the file to be deleted and the map information indicating the chunks of the file to be deleted in the change log L3. The processing unit 12 sends the meta-information of the file to be deleted, to the management apparatus 30. In addition, after time T12 and before time T13, the processing unit 12 sends the change log L3 to the management apparatus 30. In the directory structure K3 at this stage, only the file "file_y" is recognized as being subordinate to the directory "dir." On the other hand, only the file "file_x" is recognized as being subordinate to the directory "dir" in the directory structure K4.

At time T13, the processing unit 22 obtains the change log L3 from the management apparatus 30. The processing unit 22 recognizes the deleted file "file_x" on the basis of the attribute information and map information of the file "file_x" included in the change log L3. In addition, the processing unit 22 recognizes the created file "file_y" and each chunk associated with the file on the basis of the attribute information and map information of the file "file_y" included in the change log L3. In the directory structure K4 at this stage, only the file "file_y" is recognized as being subordinate to the directory "dir." Therefore, the directory structures K3 and K4 are in synchronization with each other.

As described above, each time the information processing apparatus 10 updates a file, it records the attribute information of the updated file and the map information indicating the updated chunks of the updated file. By doing so, a change log indicating the updates of the plurality of files is created. The information processing apparatus 10 sets information indicating a generation for the change log and sends the change log to the management apparatus 30 connected to the storage device 40. The information processing apparatus 20 obtains the change log from the management apparatus 30, and refers to the change log in order of generation to recognize the plurality of updated files.

In the information processing system 1, the number of operations is reduced. For example, as exemplified in FIGS. 1 and 2, the information processing apparatus 20 is able to recognize the updates of both the file X (file "file_X") and the file Y (file "file_Y") with reference to the change log L1. Therefore, the information processing apparatus 20 does not need to obtain the meta-information of the files X and Y separately from the management apparatus 30. In this connection, two operations in total are needed to obtain the meta-information separately. By contrast, in the case of using the change log L1, what is needed is to obtain the change log L1 only once, which means a reduction in the number of operations.

That is, the information processing apparatus 20 includes a file system that refers to a plurality of files, and incorporates updates of a plurality of files in the file system according to the change log L1. This enables the file systems of the information processing apparatuses 10 and 20 to synchronize with each other efficiently.

The above processing applies to the change logs L2 and L3. For example, the information processing apparatus 20 is able to recognize updates of both the file X (file_X) and the file Y (file "file_Y") with reference to the change log L2. Therefore, the information processing apparatus 20 does not need to obtain the meta-information of the files X and Y separately from the management apparatus 30. Two operations in total are needed to obtain the meta-information of the two files X and Y separately. By contrast, in the case of using the change log L2, what is needed is to obtain the change log L2 only once, which means a reduction in the number of operations. In addition, for example, the information processing apparatus 20 is able to recognize both the deletion of the file "file_x" and the creation of the file "file_y" with reference to the change log L3. Therefore, the information processing apparatus 20 does not need to obtain the meta-information of the file "file_x" and the file "file_y" separately from the management apparatus 30. Two operations in total are needed to obtain the meta-information of the file "file_x" and the file "file_y" separately. By contrast, in the case of using the change log L3, what is needed is to obtain the change log L3 only once, which means a reduction in the number of operations.

Creation of new files, updates of existing files, and deletion of existing files may be recorded in a change log. For example, creation of a new file and an update of an existing file may be recorded, or an update of an existing file and deletion of another existing file may be recorded in a change log. Alternatively, creation of a new file, an update of an existing file, and deletion of another existing file may be recorded in a change log. Yet alternatively, three or more file operations (creation, update, and deletion) may be recorded in a change log.

For operational conditions of the information processing system 1, the number of operations performed per unit time on the management apparatus 30 by the information processing apparatuses 10 and 20 may be limited. For example, in the case where the management apparatus 30 and storage device 40 are used as object storage, the number of operations per unit time on logical regions called "buckets" may be limited. Therefore, in the case where the information processing apparatus 10 updates a plurality of files and the information processing apparatus 20 obtains the meta-information of the files separately from the management apparatus 30 so as to synchronize the file systems of the information processing apparatuses 10 and 20 with each other, a delay may occur in the synchronization due to the limitation of the number of operations.

To deal with this, the information processing apparatuses 10 and 20 are designed to collectively recognize updates of a plurality of files using a change log, thereby reducing the number of operations. Even when a limit is imposed on the number of operations, synchronization between the file systems of the information processing apparatuses 10 and 20 may be accelerated.

In addition, as described earlier, the information processing apparatus 10 stores information indicating pre-update chunks corresponding to an updated portion of an updated file and information indicating updated chunks corresponding to the updated portion in map information. Then, on the basis of the map information, the information processing apparatus 10 is able to restore the updated file back to the state of a generation previous to the generation of the change log. That is to say, it is possible to restore a file, even without obtaining backups of the files stored in the storage device 40 separately.

For example, when receiving a notice of a restoration target generation, the information processing apparatus 10 restores a plurality of files back to the states of past generations one by one in reverse order of generation from the current generation, thereby restoring the plurality of files back to the state of the restoration target generation. That is to say, by tracking the change logs of the plurality of generations in order, it becomes possible to restore the plurality of files to a past state of some generations before.

The following exemplifies a system that provides object storage and describes the functions of the information processing apparatuses 10 and 20 in detail.

### (Second Embodiment)

A second embodiment will now be described.

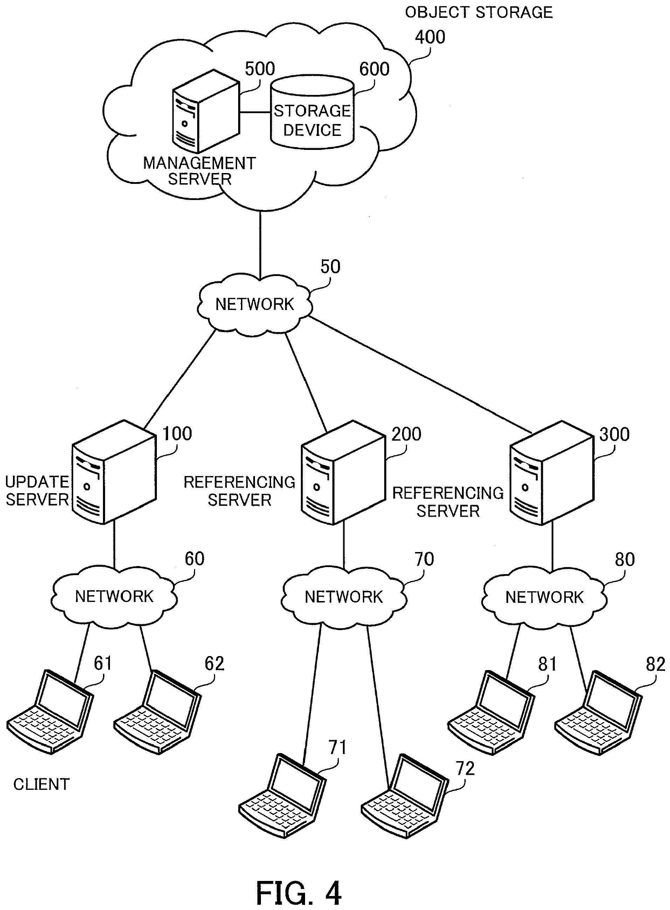

FIG. 4 illustrates an example of an information processing system according to the second embodiment.

The information processing system of the second embodiment includes an update server 100, referencing servers 200 and 300, and object storage 400. The update server 100, referencing servers 200 and 300, and object storage 400 are connected to a network 50. The network 50 is a WAN (wide area network), the Internet, or the like, for example. The update server 100 is connected to a network 60. The network 60 is a LAN (local area network), for example. Clients 61 and 62 are connected to the network 60. The referencing server 200 is connected to a network 70. The network 70 is a LAN, for example. Clients 71 and 72 are connected to the network 70. The referencing server 300 is connected to a network 80. The network 80 is a LAN, for example. Clients 81 and 82 are connected to the network 80.

The update server 100 and referencing servers 200 and 300 are server computers that enable sharing files stored in the object storage 400 among the clients 61, 62, 71, 72, 81, and 82. The update server 100 and referencing servers 200 and 300 are said to provide the functions of the NAS or file server (in this connection, files are collectively stored in the object storage 400) for the clients.

The update server 100 is a server that is permitted to update and refer to files stored in the object storage 400. One update server 100 is provided in the system, for example. The location of the update server 100 may be called an "update site." The referencing servers 200 and 300 are permitted to refer to the files stored in the object storage 400, but are not permitted to update the files. A plurality (three or more) of referencing servers including the referencing servers 200 and 300 may be provided in the system. The locations of the referencing servers 200 and 300 may be called "referencing sites."

The object storage 400 manages files in units of objects. The object storage 400 is implemented by using a management server 500 and a storage device 600, for example. The management server 500 is a server computer that receives requests from the update server 100 and referencing servers 200 and 300, and in response to the requests, stores files in the storage device 600 or relays acquisition of files from the storage device 600. The storage device 600 includes a plurality of storage devices (for example, HDDs, SSDs (solid state drives), and others) to provide large storage space.

The clients 61 and 62 are client computers that access files stored in the object storage 400 via the update server 100. The clients 61 and 62 send instructions for updating files and instructions for referring to files to the update server 100. The clients 61 and 62 provide users with an UI (user interface) for operating a directory structure created in the object storage 400, for example. The UI may be a GUI (graphical user interface) or a CUI (character user interface). Using the UI, the users are able to perform file operations (creation, update, and deletion) and make reference to files.

The clients 71 and 72 are client computers that access files stored in the object storage 400 via the referencing server 200. The clients 71 and 72 send instructions for referring to files to the referencing server 200. The clients 71 and 72 provide users with a UI (GUI or CUI) for referring to the directory structure created in the object storage 400, for example. Using the UI, the users are able to make reference to files.

The clients 81 and 82 are client computers that access files stored in the object storage 400 via the referencing server 300. The clients 81 and 82 send instructions for referring to files to the referencing server 300. The clients 81 and 82 provide users with a UI (GUI or CUI) for referring to the directory structure created in the object storage 400, for example. Using the UI, the users are able to make reference to files.

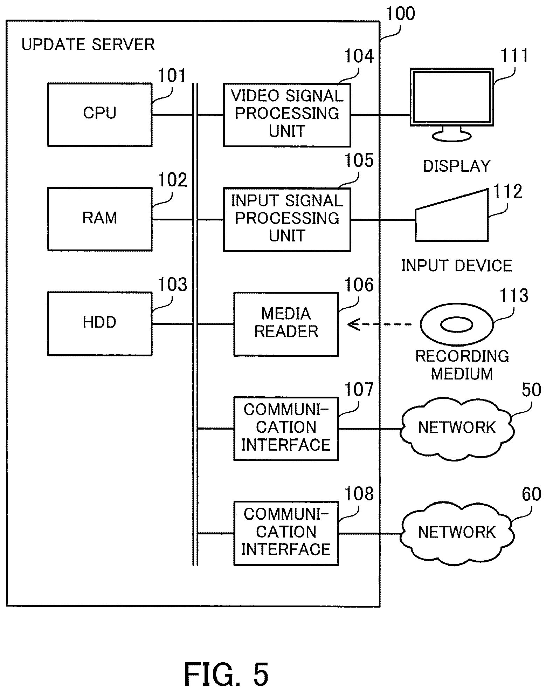

FIG. 5 is a block diagram illustrating an example of a hardware configuration of the update server.

The update server 100 includes a CPU 101, a RAM 102, an HDD 103, a video signal processing unit 104, an input signal processing unit 105, a media reader 106, and communication interfaces 107 and 108. In this connection, the CPU 101 corresponds to the processing unit 12 of the first embodiment. The RAM 102 or HDD 103 corresponds to the storage unit 11 of the first embodiment.

The CPU 101 is a processor that executes program instructions. The CPU 101 loads at least part of a program and data from the HDD 103 to the RAM 102 and runs the program. In this connection, the CPU 101 may include a plurality of processor cores. Alternatively, the update server 100 may include a plurality of processors. The processing to be described later may be performed in parallel using a plurality of processors or processor cores. In addition, a set of multiple processors may be called a "multiprocessor" or simply a "processor."

The RAM 102 is a volatile semiconductor memory device that temporarily stores therein programs to be executed by the CPU 101 and data to be used in operations by the CPU 101. Note that the update server 100 may be provided with a different type of memory device other than RAM, or may be provided with a plurality of memory devices.

The HDD 103 is a non-volatile storage device that stores therein software programs, such as an OS (operating system), middleware, and application software, and data. Note that the update server 100 may be provided with a different type of storage device, such as a flash memory or an SSD (solid state drive), or may be provided with a plurality of non-volatile storage devices.

The video signal processing unit 104 outputs images to a display 111 connected to the update server 100 in accordance with commands from the CPU 101. The display 111 may be any type of display, such as a CRT (cathode ray tube) display or an LCD (liquid-crystal display).

The input signal processing unit 105 receives an input signal from an input device 112 connected to the update server 100 and supplies the input signal to the CPU 101. Various types of input devices may be used as the input device 112, and for example, a pointing device, such as a mouse or a touch panel, or a keyboard may be used. Plural types of input devices may be connected to the update server 100.

The media reader 106 is a reading device for reading programs and data from a recording medium 113. The recording medium 113 may be, for example, a magnetic disk, an optical disc, an MO (magneto-optical disk), or a semiconductor memory device. Examples of magnetic disks include FDs (flexible disks) and HDDs. Examples of optical discs include CDs (compact discs) and DVDs (digital versatile discs).

The media reader 106 copies programs and data read out from the recording medium 113 to a different recording medium, such as the RAM 102 or the HDD 103, for example. The read programs are executed, for example, by the CPU 101. Note that the recording medium 113 may be a portable recording medium and used to distribute the programs and data. The recording medium 113 and the HDD 103 are sometimes referred to as computer-readable recording media.

The communication interface 107 is connected to the network 50, and communicates with the object storage 400 over the network 50. For example, the communication interface 107 may be connected to a communication device belonging to the network 50, such as a switch or router, with a cable.

The communication interface 108 is connected to the network 60, and communicates with the clients 61 and 62 over the network 60. For example, the communication interface 108 is connected to a communication device belonging to the network 60, such as a switch or router, with a cable.

In this connection, the referencing servers 200 and 300, management server 500, and clients 61, 62, 71, 72, 81, and 82 may be implemented with the same hardware configuration as the update server 100.

The update server 100 and referencing servers 200 and 300 function as file systems that have the object storage 400 as a backend and perform deduplication.

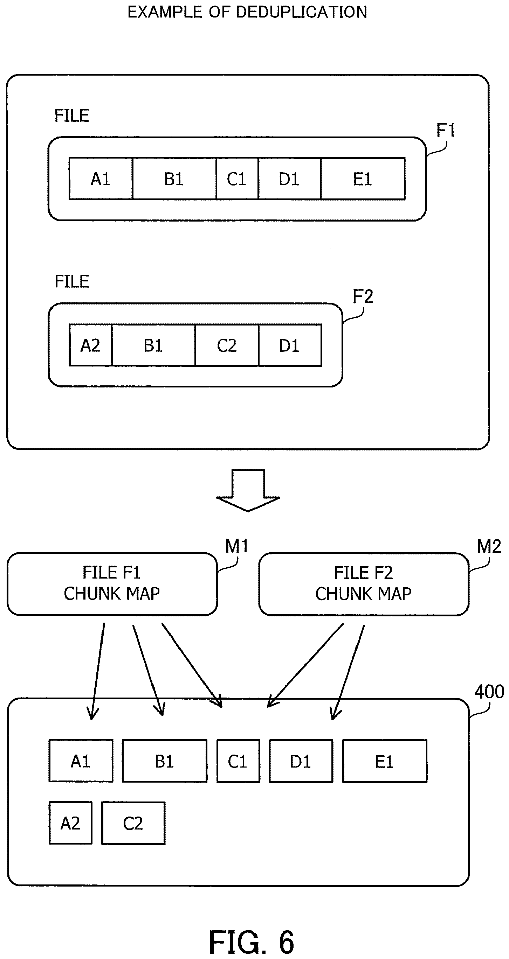

FIG. 6 illustrates an example of deduplication.

Consider now the case where files F1 and F2 are stored in the object storage 400. Each of the files F1 and F2 is divided into data units called chunks. Each chunk may have a different size. For example, the file F1 is divided into five chunks A1, B1, C1, D1, and E1. In addition, for example, the file F2 is divided into four chunks A2, B1, C2, and D1. Each chunk is stored in a chunk store (that is, object storage 400) after deduplication. That is, in this example, two chunks B1 and D1 are included in both the files F1 and F2. In this case, a fewer chunks B1 and D1 than the number of files F1 and F2 that refer to the chunks B1 and D1 are stored. For example, only one chunk B1 is stored for the two files F1 and F2. Similarly, only one chunk D1 is stored for the two files F1 and F2. This saves the storage space in the object storage 400.

In this case, a chunk map M1 that associates the file F1 with chunks constituting the file F1 is created. In addition, a chunk map M2 that associates the file F2 with chunks constituting the file F2 is created. For example, the chunk map M1 includes information indicating that the file F1 consists of the chunks A1, B1, C1, D1, and E1. The chunk map M2 includes information indicating that the file F2 consists of the chunks A2, B1, C2, and D1. Each of these chunks and chunk maps M1 and M2 is managed as an object.

The update server 100 and referencing servers 200 and 300 are able to specify the chunks A1, B1, C1, D1, and E1 constituting the file F1 on the basis of the chunk map M1. Similarly, the update server 100 and referencing servers 200 and 300 are able to specify the chunks constituting the file F2 on the basis of the chunk map M2.

For example, the update server 100 downloads the chunks A1, B1, C1, D1, and E1 constituting the file F1 from the object storage 400 on the basis of the chunk map M1, and provides the clients 61 and 62 with the body data of the file F1. The update server 100 is able to receive updates of the file F1 made by the clients 61 and 62.

In addition, for example, the referencing server 200 downloads the chunks A2, B1, C2, and D1 constituting the file F2 from the object storage 400 on the basis of the chunk map M2, and provides the clients 71 and 72 with the body data of the file F2. The referencing server 300 has the same functions as the referencing server 200.

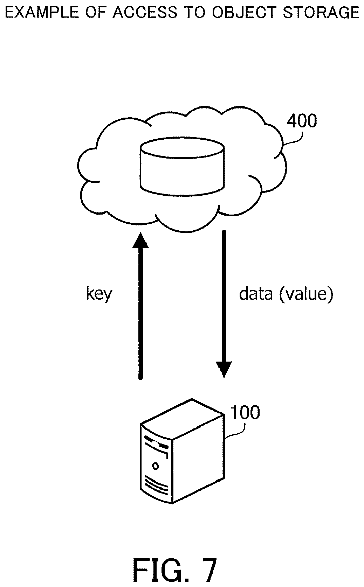

FIG. 7 illustrates an example of access to object storage.

The file system of the update server 100 receives a read request for reading a certain file from a client 61 or 62. Then, the file system of the update server 100 specifies the keys of objects corresponding to the requested file to the object storage 400 to obtain corresponding data (values) from the object storage 400. When receiving a write request, the update server 100 obtains data from the object storage 400, in the same way as the read request. The referencing servers 200 and 300 obtain data specified in read requests received from clients, from the object storage 400, in the same way as the update server 100.

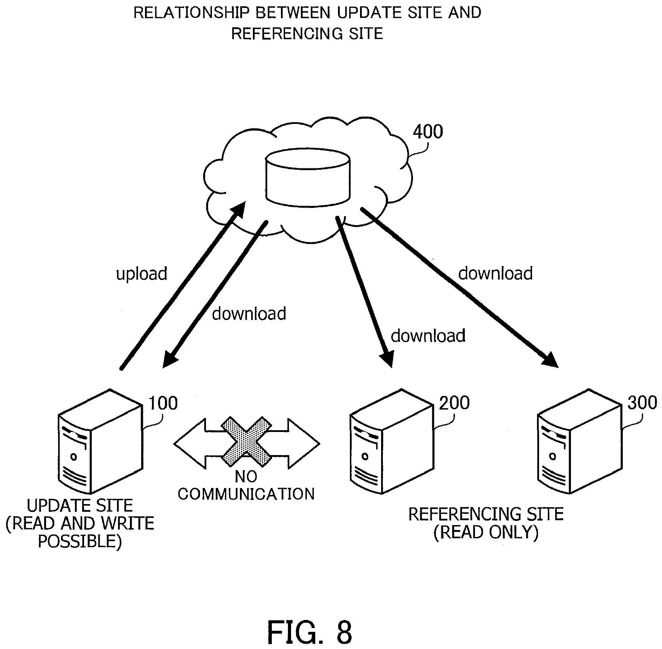

FIG. 8 illustrates an example of relationship between an update site and a referencing site.

As described earlier, the update server 100 at the update site is able to perform read and write operations on the object storage 400. That is, the update server 100 uploads objects to be written, to the object storage 400. In addition, the update server 100 downloads objects to be read, from the object storage 400.

The referencing servers 200 and 300 at referencing sites are able to perform only read operations on the object storage 400. That is, the referencing servers 200 and 300 download objects to be read, from the object storage 400.

Further, the update server 100 and the referencing server 200 do not communicate with each other. In addition, the update server 100 and the referencing server 300 do not communicate with each other.

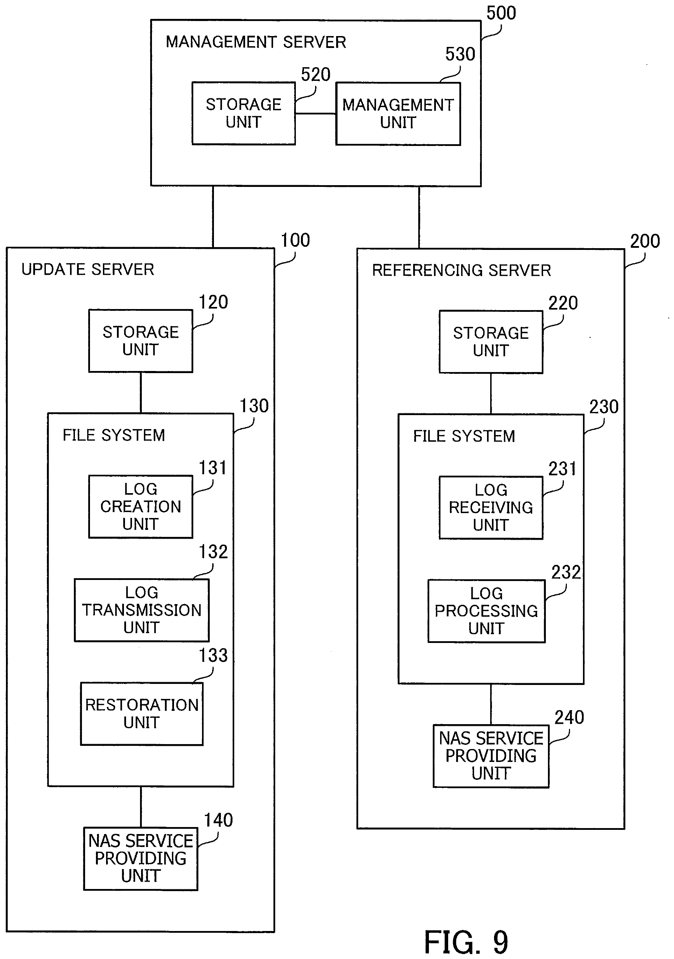

FIG. 9 illustrates an example of functions of the information processing system.

The update server 100 includes a storage unit 120, a file system 130, and a NAS service providing unit 140. The storage unit 120 is implemented by using a storage space in the RAM 102 or HDD 103. The file system 130 and NAS service providing unit 140 are implemented by causing the CPU 101 to run programs stored in the RAM 102.

The storage unit 120 stores therein change logs. Each change log is history information indicating a history of creation, update, and deletion of a plurality of files. In addition, the storage unit 120 stores therein information indicating a reference count of each chunk, which indicates how many files refer to the chunk.

The file system 130 divides files into chunks, deduplicates the chunks of the files, and stores the deduplicated chunks in the object storage 400. For example, a PUT command is used for writing data to the object storage 400, and a GET command is used for reading data. One file consists of a plurality of objects. The file system 130 supplies files stored in the object storage 400 to the NAS service providing unit 140. The file system 130 includes a log creation unit 131, a log transmission unit 132, and a restoration unit 133.

Each time a file is created, updated, or deleted, the log creation unit 131 records attribute information of the file and map information indicating chunks relating to the file after the update. By doing so, the log creation unit 131 creates a change log indicating the creation, updates, and deletion of the plurality of files. The log creation unit 131 sets information indicating a generation for the change log. The log creation unit 131 stores the change log in the storage unit 120.

When records are made to the change log during a prescribed period of time, the log transmission unit 132 sends the change log to the management server 500. When the log transmission unit 132 sends the change log, the log creation unit 131 starts to create a change log of the next generation.

The restoration unit 133 restores files stored in the object storage 400 back to the state of a past generation on the basis of change logs stored in the storage unit 120.

The NAS service providing unit 140 provides NAS services for the clients 61 and 62. The NAS service providing unit 140 may be implemented by using NFS (network file system) or Samba, for example. The NAS service providing unit 140 accesses files stored in the object storage 400 via the file system 130 (read and write operations are possible).

The referencing server 200 includes a storage unit 220, a file system 230, and a NAS service providing unit 240. The storage unit 220 may be implemented by using a storage space in a RAM or HDD provided in the referencing server 200. The file system 230 and NAS service providing unit 240 are implemented by causing a CPU provided in the referencing server 200 to run programs stored in the RAM provided in the referencing server 200.

The storage unit 220 stores therein change logs. The change logs are obtained by the file system 230 from the management server 500 and are stored in the storage unit 220.

The file system 230 supplies files stored in the object storage 400 to the NAS service providing unit 240. The file system 230 includes a log receiving unit 231 and a log processing unit 232.

The log receiving unit 231 receives a change log from the management server 500. For example, the log receiving unit 231 receives a change log from the management server 500 at intervals at which the log transmission unit 132 sends a change log. The log receiving unit 231 stores the received change log in the storage unit 220.

The log processing unit 232 processes change logs. The log processing unit 232 recognizes newly created files, updated existing files, and deleted existing files on the basis of a change log. The log processing unit 232 gives information about the directory structure changed according to the creation, updates, and deletion of the files to the NAS service providing unit 240.

The NAS service providing unit 240 provides NAS services for the clients 71 and 72. The NAS service providing unit 240 may be implemented by using NFS or Samba, for example. The NAS service providing unit 240 accesses files stored in the object storage 400 via the file system 230 (only read operations are possible).

Note that the referencing server 300 has the same functions as the referencing server 200. In addition, although not illustrated in FIG. 9, the file system 130 also has the same functions as the log processing unit 232.

The management server 500 includes a storage unit 520 and a management unit 530. The storage unit 520 is implemented by using a storage space in a RAM or HDD provided in the management server 500. The management unit 530 is implemented by causing a CPU provided in the management server 500 to run programs stored in the RAM provided in the management server 500.

The storage unit 520 stores therein change logs received from the update server 100.

The management unit 530 receives objects for each file from the update server 100 and stores them in the storage device 600. Also, the management unit 530 receives change logs from the update server 100 and stores them in the storage unit 520. The management unit 530 may store the change logs in the storage device 600. The management unit 530 supplies change logs and various types of objects to the update server 100 and referencing servers 200 and 300.

As described earlier, each file consists of a plurality of objects. There are following three main types of objects.

An object of first type is an inode object (inodeObject). The inode object is used to manage the inode information of a file. The inode information is one example of the "attribute information" described in the first embodiment. For example, the inode object has a size of about 400 bytes per file.

An object of second type is a chunk map object (chunkmapObject). The chunk map object is the mapping information of the chunk data of a file. For example, the chunk map object has a size of about 6 kilobytes per gigabyte of a file. The chunk map object of an entire file is an example of the "meta-information" described in the first embodiment. In addition, the chunk map object may be included in a change log. The chunk map object included in the change log is an example of the "map information" described in the first embodiment. The chunk map object may be referred to as "chunk map," simply.

An object of third type is a chunk data object (chunkdataObject). The chunk data object is information that is used to manage unique chunk data (chunkdata) in each file system that accesses the object storage 400. The chunk data object has a size of about 125 megabytes per object. The chunk data may be referred to as "chunk," simply.

For example, when the update server 100 writes a file, the update server 100 uploads an inode object, a chunk map object, and a chunk data object to the management server 500. Then, when the referencing server 200 downloads the inode object and chunk map object from the management server 500, the file system 230 in the referencing server 200 recognizes the written file on the basis of these objects. The referencing server 200 downloads the corresponding chunk data from the management server 500 on the basis of the chunk map object to thereby obtain the body data of the file, and then supplies it to the NAS service providing unit 240.

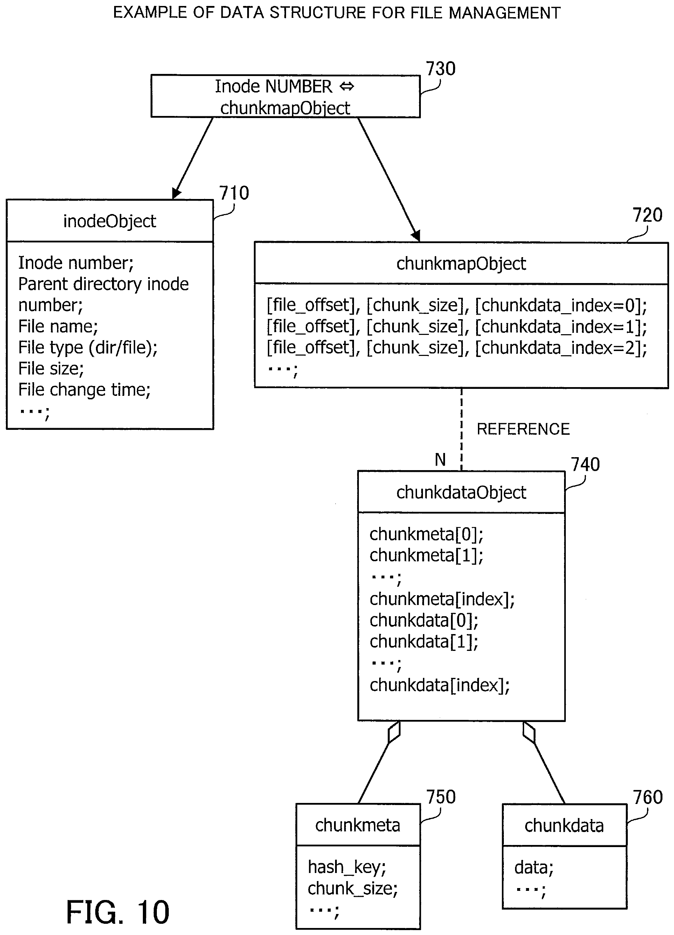

FIG. 10 illustrates an example of a data structure for file management.

The following describes relationship among classes corresponding to the above-described three types of objects. A class 710 is a basic class for inode objects. An instance of the class 710 corresponds to an inode object. The class 710 includes information such as inode number, parent directory inode number, file name, file type, file size, file change time, and others. The file type indicates whether the inode object indicates a directory (dir) or a file (file).

A class 720 is a basic class for chunk map objects. An instance of the class 720 corresponds to a chunk map object. The arrangement of chunks of a file is managed using a chunk map object. Each record of the class 720 includes [file_offset], [chunk_size], and [chunkdata_index]. The chunk map object may include a plurality of records.

[file_offset] indicates an offset position from the beginning of the file. [chunk_size] indicates the size of the chunk data corresponding to the offset position. [chunkdata_index] indicates the index of the chunk data corresponding to the offset position. The chunk map object includes references to N records (N is an integer of one or greater) of a chunk data object.

An inode object and a chunk map object are associated with each other using association information 730. For example, the association information 730 indicates an association between the inode number included in the inode object and the chunk map object.

A class 740 is a basic class for chunk data objects. An instance of the class 740 corresponds to a chunk data object. Chunks of a file are managed using a chunk data object together with hashed information. Each record of the class 740 includes chunkmeta[index] and chunkdata[index] .

The chunkmeta[index] indicates an object of chunk metadata (chunkmeta). The chunkdata[index] indicates an object of chunk data. The chunk metadata and the chunk data are associated with each other using an index.

A class 750 is a basic class for the chunk metadata. An instance of the class 750 corresponds to an object of chunk metadata. The chunk metadata includes information such as hash_key, chunk_size, and others. The hash_key is a summary of a chunk. The chunk_size is the size of the chunk. The uniqueness of the chunk is confirmed based on the hash_key and chunk_size, and duplicates are detected.

A class 760 is a basic class for the chunk data. An instance of the class 760 corresponds to an object of chunk data. The chunk data is a data body (represented as data in the figure) of a chunk.

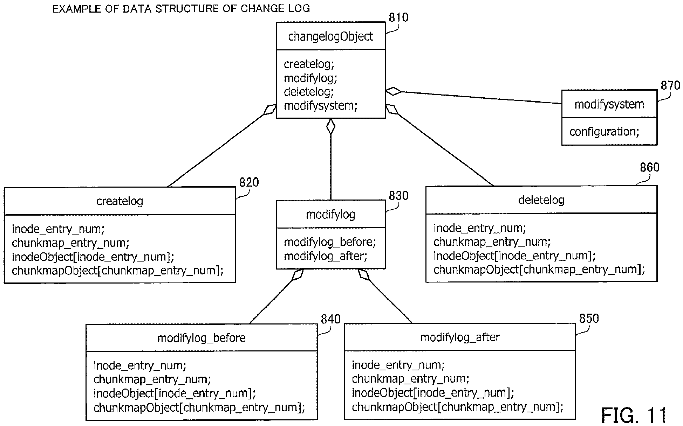

FIG. 11 illustrates an example of a data structure of a change log.

A class 810 is a basic class for change logs (may be represented as changelogObject or changelog in the figure). An instance of the class 810 corresponds to a change log. A change log includes references to objects such as createlog, modifylog, deletelog, and modifysystem. The createlog is an object indicating created new files. The modifylog is an object indicating updated existing files. The deletelog is an object indicating deleted existing files. The modifysystem is an object that is used by the update server 100 to notify the referencing servers 200 and 300 of a setting change (for example, a change in intervals of uploading or downloading a change log) in the information processing system.

A class 820 is a basic class for the createlog. An instance of the class 820 corresponds to the createlog. The class 820 includes inode_entry_num, chunkmap_entry_num, inodeObject[inode_entry_num], and chunkmapObject[chunkmap_entry_num].

The inode_entry_num indicates the number of inode objects entered in the createlog. The chunkmap_entry_num indicates the number of chunk map objects entered in the createlog. The inodeObject[inode_entry_num] is a list of inode objects in the createlog. The chunkmapObject[chunkmap_entry_num] is a list of chunk map objects in the createlog.

A class 830 is a basic class for the modifylog. An instance of the class 830 corresponds to the modifylog. The class 830 includes references to objects of modifylog_before and modifylog_after. The modifylog_before is an object indicating pre-update chunks relating to updated existing files. The modifylog_after is an object indicating updated chunks relating to the updated existing files.

A class 840 is a basic class for the modifylog_before. An instance of the class 840 corresponds to the modifylog_before. The class 840 includes inode_entry_num, chunkmap_entry_num, inodeObject[inode_entry_num], and chunkmapObject[chunkmap_entry_num].

The inode_entry_num indicates the number of inode objects entered in the modifylog_before. The chunkmap_entry_num indicates the number of chunk map objects entered in the modifylog_before. The inodeObject[inode_entry_num] is a list of inode objects in the modifylog_before. The chunkmapObject[chunkmap_entry_num] is a list of chunk map objects in the modifylog_before.

A class 850 is a basic class for the modifylog_after. An instance of the class 850 corresponds to the modifylog_after. The class 850 includes inode_entry_num, chunkmap_entry_num, inodeObject[inode_entry_num], and chunkmapObject[chunkmap_entry_num].

The inode_entry_num indicates the number of inode objects entered in the modifylog_after. The chunkmap_entry_num indicates the number of chunk map objects entered in the modifylog_after. The inodeObject[inode_entry_num] is a list of inode objects in the modifylog_after. The chunkmapObject[chunkmap_entry_num] is a list of chunk map objects in the modifylog_after.

Only information on updated chunks of files is registered in the chunk map objects of the modifylog_before and modifylog_after, and information on non-updated chunks is not registered therein. This reduces the sizes of the modifylog_before and modifylog_after, and thus reduces the size of the change log.

A class 860 is a basic class for the deletelog. An instance of the class 860 corresponds to the deletelog. The class 860 includes inode_entry_num, chunkmap_entry_num, inodeObject[inode_entry_num], and chunkmapObject[chunkmap_entry_num].

The inode_entry_num indicates the number of inode objects entered in the deletelog. The chunkmap_entry_num indicates the number of chunk map objects entered in the deletelog. The inodeObject[inode_entry_num] is a list of inode objects in the deletelog. The chunkmapObject[chunkmap_entry_num] is a list of chunk map objects in the deletelog.

A class 870 is a basic class for the modifysystem. An instance of the class 870 corresponds to the modifysystem. The class 870 includes a configuration. The configuration is information indicating a setting change of the system, as described earlier. Examples of the setting change in the system include a change in intervals of uploading a change log and a change in intervals of downloading a change log.

Note that the change log includes the association information 730 that associates an inode object and a chunk map object included in each of the createlog, modifylog_before, modifylog_after, and deletelog.

In addition, the change log and the objects included in the change log as illustrated in FIG. 11 are collectively registered in one object called a change log, which is able to be uploaded or downloaded through one operation. In addition, the change log and the object names of the objects included in the change log are given the same number indicating a generation.

The following describes an example of how the update server 100 uploads a change log.

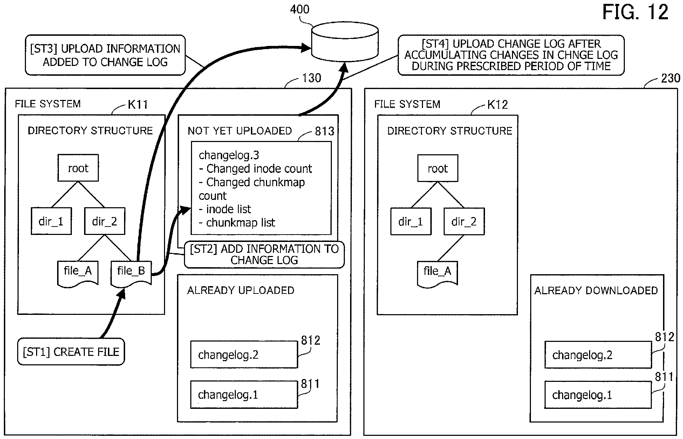

FIG. 12 illustrates an example of uploading a change log.

A case where a new file is created will be considered by way of example. A directory structure K11 is recognized by the file system 130. A directory structure K12 is recognized by the file system 230. The directory structures K11 and K12 originally have directories "dir_1" and "dir_2" subordinate to a root directory and a file "file_A" subordinate to the directory "dir_2."

Note that the update server 100 has already uploaded change logs 811 and 812 to the object storage 400. In addition, the referencing server 200 has already downloaded the change logs 811 and 812 from the object storage 400. The change log 811 has an object name of "changelog.1," and the change log 812 has an object name of "changelog.2." A number at the end of the object name indicates a generation. A higher number indicates a more recent generation, and a lower number indicates an older generation. That is, change logs up to the change log 812 with a generation number "2" are incorporated in the directory structure K12, which is recognized by the file system 230. The file system 130 keeps the uploaded change logs in the storage unit 120.

In this state, the file system 130 accepts creation of a file "file_B" subordinate to the directory "dir_2" (step ST1). For example, a user at the update site operates the client 61 to send an instruction for creating the file "file_B" subordinate to the directory "dir_2" to the update server 100. Then, the file system 130 receives the creation instruction via the NAS service providing unit 140.

The file system 130 adds information indicating that the file "file_B" has been created subordinate to the directory "dir_2" (more specifically, createlog information) to a change log 813 with a generation number "3" (step ST2). In the case where a new file has been created but the data body of the file has not been created, only an inode object is created. Then, when the data body of the file is created, its chunk data and chunk map object are created. In addition, only an inode object is created for a directory and a symbolic link. The change log 813 is given an object name of "changelog.3." In the directory structure K11 at this stage, the file "file_B" is located subordinate to the directory "dir_2."

The file system 130 uploads the information added to the change log to the object storage 400 (step ST3). Note that, when the data body of the file "file_B" is created, chunk data generated by dividing the data body into chunks, a chunk data object, and a chunk map object are uploaded to the object storage 400.

After the file system 130 accumulates the contents of changes in the change log 813 during a prescribed period of time starting from the last upload time, the file system 130 uploads the change log 813 to the object storage 400 (step ST4).

The following describes an example of how the referencing server 200 downloads a change log.

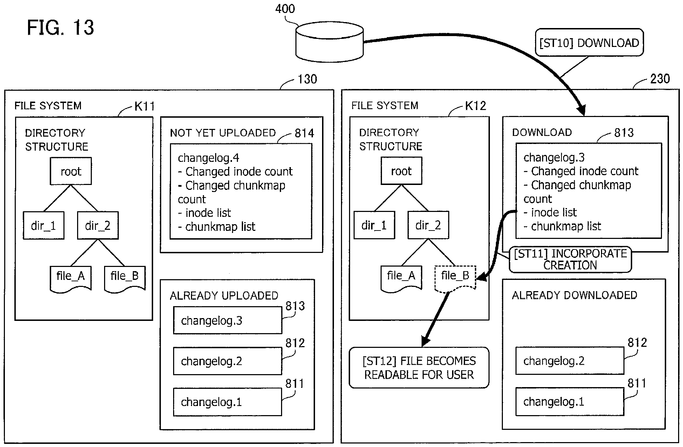

FIG. 13 illustrates an example of downloading a change log.

After the file system 130 uploads the change log 813, the file system 130 starts to create a change log 814. The change log 814 is given an object name of "changelog.4."

When a prescribed period of time has passed from the download of the change log 812, the file system 230 downloads the change log 813 of a generation that is not yet downloaded, from the object storage 400 (step ST10).

The file system 230 incorporates the creation of the file "file_B" in the directory structure K12 according to the createlog of the change log 813 (step ST11). After the incorporation, the file system 230 supplies the directory structure K12 to the client 71 via the NAS service providing unit 240.

Then, the user at the referencing site uses the client 71 to confirm the directory structure K12 and recognize that the file "file_B" has newly been created. Therefore, the user is able to read the file "file_B" using the client 71 (step ST12). For example, the file system 230 receives a read request for the file "file_B" via the NAS service providing unit 240, and downloads the chunk data constituting the file "file_B" from the object storage 400 on the basis of the chunk map object included in the createlog of the change log 813. The file system 230 then provides the client 71 with the file "file_B" via the NAS service providing unit 240 on the basis of the downloaded chunk data.

The following describes the above-described processing performed by the update server 100 and referencing server 200. First, how the update server 100 creates a change log will be described.

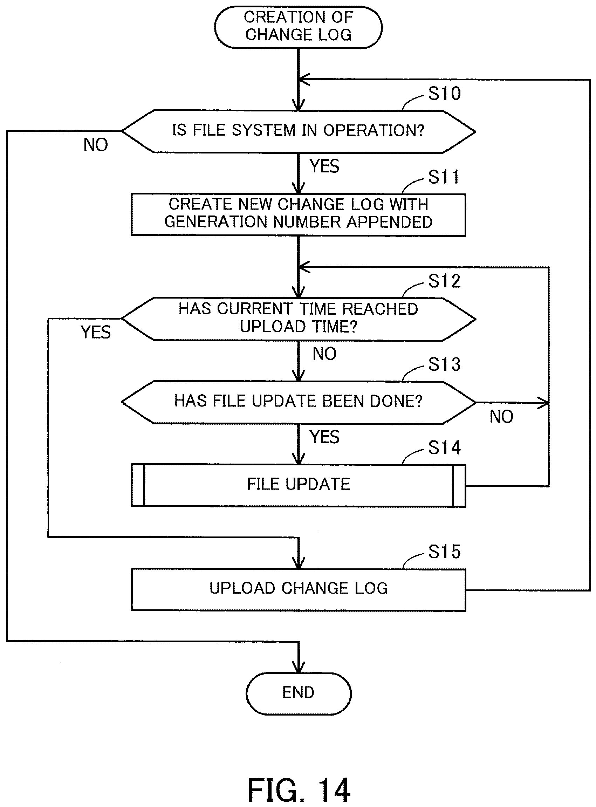

FIG. 14 is a flowchart illustrating an example of creating a change log.

(S10) The file system 130 determines whether the file system 130 is in operation. If the file system 130 is in operation, the process proceeds to step S11. If the file system 130 is not in operation (for example, the case where the file system 130 has received an instruction to stop its operation, or another case), the creation of a change log is completed.

(S11) The log creation unit 131 creates a new change log with a generation number appended, on the basis of the class 810.

(S12) The log creation unit 131 determines whether the current time has reached the upload time of a change log. If the current time has reached the upload time, the process proceeds to step S15. Otherwise, the process proceeds to step S13.

(S13) The log creation unit 131 determines whether a file update has been done. If a file update has been done, the process proceeds to step S14. Otherwise, the process proceeds to step S12. The file update includes creation of a new file, an update of an existing file, and deletion of an existing file.

(S14) The log creation unit 131 performs a file update process. The file update process will be described in detail later. Then, the process proceeds to step S12.

(S15) The log transmission unit 132 uploads the change log of the current generation. The change log is uploaded asynchronously with creation of a change log of the next generation. Then, the process proceeds to step S10.

The following describes how the update server 100 performs the file update process.

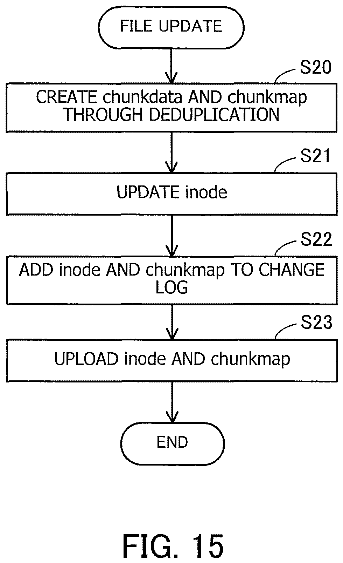

FIG. 15 is a flowchart illustrating an example of the file update process.

This file update process is performed at step S14.

(S20) The file system 130 creates chunk data (represented as chunkdata in this figure) and chunk map object (represented as chunkmap). At this time, the file system 130 performs deduplication in the same manner as described with reference to FIG. 6.

(S21) The file system 130 updates the inode object (represented as inode in the figure) of a file in question. For example, the file system 130 updates information such as an update date and time and size of the inode object.

(S22) The log creation unit 131 adds the inode object and chunk map object created or updated by the file system 130 to the change log. As described earlier, in the case where a new file has been created, the log creation unit 131 adds the inode object and chunk map object to the createlog of the change log. In the case where an existing file has been updated, the log creation unit 131 adds the inode object and chunk map object to the modifylog_before and modifylog_after of the change log. In this case, the log creation unit 131 adds only information about the updated chunks to the chunk map objects in the modifylog_before and modifylog_after. In the case where an existing file has been deleted, the log creation unit 131 adds the inode object and chunk map object to the deletelog of the change log.

(S23) The file system 130 uploads the created or updated inode object and chunk map object to the object storage 400. In addition, the file system 130 uploads the newly created chunk data to the object storage 400. The upload of step S23 is performed asynchronously with the creation of the change log. Then, the file update is completed.

In the case where a file has been deleted, the file system 130 notifies the object storage of the deletion of inode object and chunk map object corresponding to the file. The log creation unit 131 adds the contents of the deletion to the deletelog of the change log.

The following describes how the update server 100 deletes a change log.

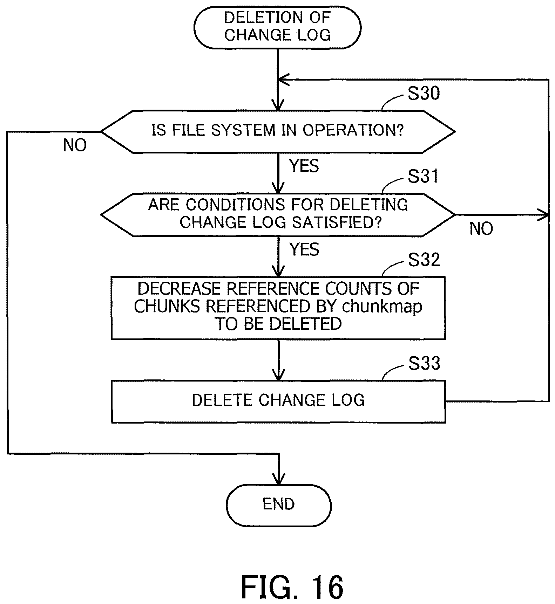

FIG. 16 is a flowchart illustrating an example of deleting a change log.

(S30) The file system 130 determines whether the file system 130 is in operation. If the file system 130 is in operation, the process proceeds to step S31. If the file system 130 is not in operation (for example, the case where the file system 130 has received an instruction to stop its operation, or another case), the deletion of a change log is completed.

(S31) The log creation unit 131 determines whether conditions for deleting a change log are satisfied. If the conditions are satisfied, the process proceeds to step S32. Otherwise, the process proceeds to step S30.

The log creation unit 131 deletes a change log when the prescribed deletion conditions become satisfied. For example, the log creation unit 131 determines an interval for deletion on the basis of an interval of uploading a change log and a used capacity. The following deletion conditions are considered. First conditions are that the maximum available storage size for change logs is set to "N [GB]." In this case, when the total size of all stored change logs exceeds the maximum available storage size, the log creation unit 131 deletes a change log of the oldest generation. Second conditions are that the maximum number of storable change logs is set to "N generations." In this case, when the number of stored change logs exceeds the maximum number of storable change logs, the log creation unit 131 deletes a change log of the oldest generation. Especially, as an example of the second conditions, each generation may be set to have a time period of ten minutes and to be retained for 24 hours, and the maximum number of storable change logs may be set to 144 generations.

(S32) The log creation unit 131 decreases the reference counts of chunks referenced by the chunk map objects (chunkmap) included in a deletion-target change log. The deletion-target change log is determined based on the deletion conditions described at step S31.

(S33) The log creation unit 131 deletes the deletion-target change log. Then, the process proceeds to step S30.

The following describes the reference count of a chunk.

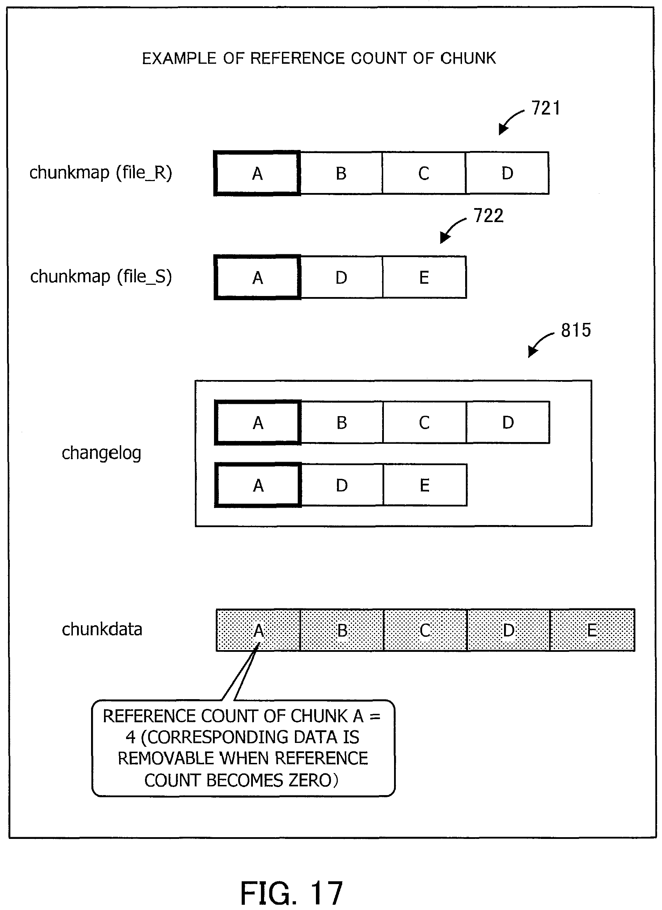

FIG. 17 illustrates an example of the reference count of a chunk.

For example, a chunk map object 721 is a chunk map of a file "file_R." For example, the chunk map object 721 includes references to chunks A, B, C, and D. A chunk map object 722 is a chunk map of a file "file_S." The chunk map object 722 includes references to the chunks A, D, and E.

Further, a change log 815 includes a chunk map object corresponding to the chunk map object 721 and a chunk map object corresponding to the chunk map object 722.

In this case, assuming that there are no other files, for example, the reference count of the chunk A is four. For example, when the reference count of the chunk A becomes zero due to deletion of the files "file_R" and "file_S" and deletion of the change log 815, the chunk A is allowed to be deleted. Therefore, when the reference count of a chunk becomes zero as a result of decreasing the reference count of the chunk at above-described step S32, the log creation unit 131 instructs the object storage 400 to delete the chunk.

The following describes how the referencing server 200 updates the file system.

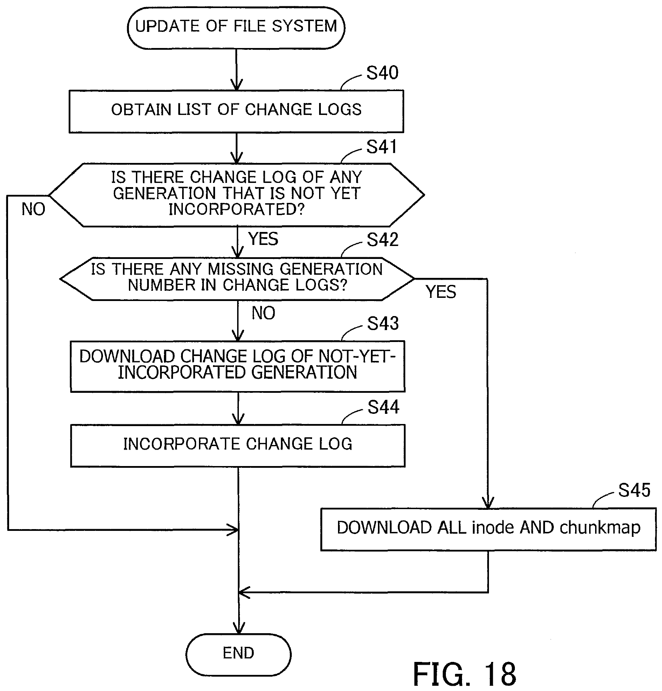

FIG. 18 is a flowchart illustrating an example of updating a file system.

The referencing server 200 performs the following procedure at prescribed intervals (for example, at intervals of uploading a change log by the update server 100).

(S40) The log receiving unit 231 obtains a list of generations of existing change logs from the object storage 400. For example, the management server 500 stores therein the list of generations of the change logs stored in the management server 500. The log receiving unit 231 is able to download the list from the management server 500.

(S41) The log receiving unit 231 compares the list obtained at step S40 with the generations of already downloaded change logs to determine whether there is a change log of any generation that is not yet incorporated in the file system 230. If a change log of a not-yet-incorporated generation is found, the process proceeds to step S42. If the change logs of all generations are already incorporated, the update of the file system is completed.

(S42) The log receiving unit 231 determines whether there is any generation number missing in the change logs. If any generation number is missing, the process proceeds to step S45. If no generation number is missing, the process proceeds to step S43. In this connection, if there is any generation number missing between the generations of the already downloaded change logs and the oldest generation among the not-yet-incorporated generations detected at step S41, the log receiving unit 231 detects the existence of the missing generation number. In the example of the second embodiment, generation numbers are given one by one in ascending order, and therefore a difference in generation number between the generation number of the most recent generation among the already downloaded change logs and the generation number of the oldest generation among the not-yet-incorporated generations is two or greater, it means that at least one generation number is missing. In the other cases (for example, the difference in generation number is one), the log receiving unit 231 determines that no generation number is missing in the change logs. For example, in the case where the referencing server 200 is not in operation during the maximum retention time period for change logs or longer, or in other cases, there may be a missing generation number.

(S43) The log receiving unit 231 downloads the change logs of the not-yet-incorporated generations from the object storage 400.

(S44) The log processing unit 232 refers to the downloaded change logs in order of generation, to incorporate the contents of the change log of each generation in the directory structure, thereby updating the file system 230. By doing so, the log processing unit 232 recognizes the creation, updates, and deletion of files made by the update server 100. Then, the update of the file system is completed.

(S45) The file system 230 downloads all differential inode objects (inode) and chunk map objects (chunkmap). Then, the file system 230 incorporates the latest state of each file in the directory structure on the basis of the downloaded inode objects and chunk map objects. Then, the update of the file system is completed. The "differentials" to be downloaded are differentials between directories and files recognized by the file system 230 immediately before step S45 and the latest directories and files managed by the object storage 400. The download operation is performed on each inode object of the files and on each chunk map object of the entire files.

As described above, the referencing server 200 obtains a list of generations of change logs stored in the management server 500 and determines the generations of change logs to be acquired from the management server 500, on the basis of the list and the generations of change logs already incorporated in the referencing server 200. Therefore, what the referencing server 200 needs to do is just to download change logs of not-yet-incorporated generations, thus making it possible to prevent change logs of already incorporated generations from being downloaded in duplicate.

In addition, the referencing server 200 determines whether there is any generation missing between the generations stored in the management server 500 and the generations of already incorporated change logs. Then, if any generation is missing, the referencing server 200 performs a process of obtaining the attribute information of a file included in a plurality of file and information indicating all chunks belonging to the file from the management server 500, for each file separately, for example. By doing so, the referencing server 200 is able to appropriately update the file system 230 even if it is not possible to update the file system 230 using a change log.

The following describes an example of reducing the number of download operations in the referencing server 200. Although the referencing server 200 is used for the explanation by way of example, the referencing server 300 operates in the same manner as the referencing server 200.

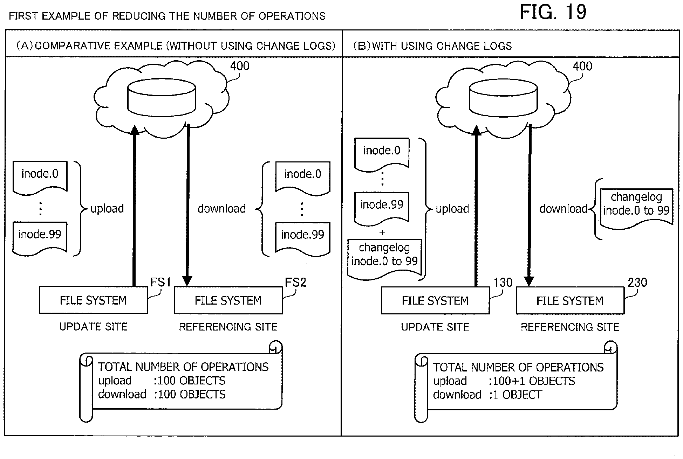

FIG. 19 illustrates a first example of reducing the number of operations.
(A) in FIG. 19 is a comparative example in which change logs are not used. In this comparative example, assume that a file system at an update site is referred to as a file system FS1 and a file system at a referencing site is referred to as a file system FS2.

As an example, consider the case where 100 files are created at the update site.

In the case of the comparative example, the file system FS1 creates 100 inode objects ("inode.0" to "inode.99") according to the creation of the 100 files, and uploads them to the object storage 400. Then, the file system FS2 downloads the 100 uploaded inode objects separately, and recognizes the 100 created files.

In this case, the number of operations performed for the uploading by the file system FS1 is 100. In addition, the number of operations performed for the downloading by the file system FS2 is 100.
(B) in FIG. 19 exemplifies the case of the file systems 130 and 230 that use change logs. Consider the case where 100 files are created at the update site, as in (A) of FIG. 19.

The file system 130 creates 100 inode objects ("inode.0" to "inode.99") and one change log (changelog including "inode.0" to "inode.99") according to the creation of the 100 files. The file system 130 uploads the 100 inode objects and the one change log to the object storage 400.

Then, the file system 230 downloads the one uploaded change log and recognizes the new 100 files created by the file system 130.

In this case, the number of operations performed for the uploading by the file system 130 is calculated as 100 + 1 = 101. In addition, the number of operations performed for the downloading by the file system 230 is one. That is, the number of operations performed for the downloading at the referencing site is reduced from 100 (in the comparative example) to one. In addition, the total number of operations performed for the uploading and downloading is reduced from 200 (in the comparative example) to 102. That is, it is possible to reduce the number of operations by 200 - 102 = 98 in total at the update site and referencing site. In this way, with the update server 100 and referencing server 200, it is possible to reduce the number of operations.

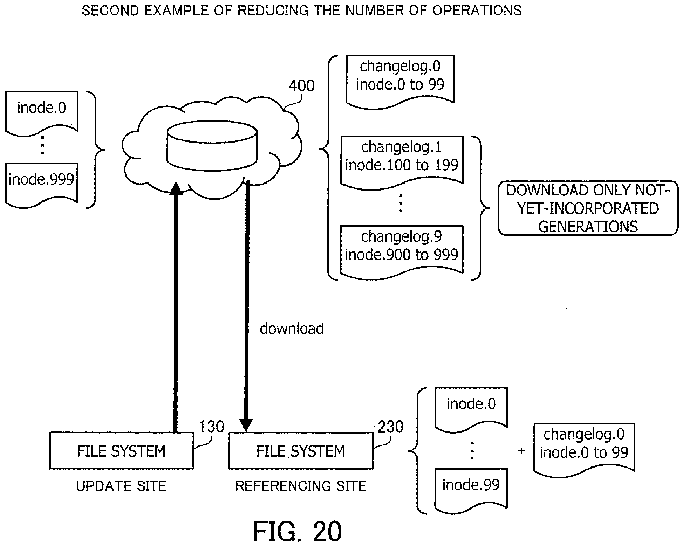

FIG. 20 is a second example of reducing the number of operations.

Consider the case where the file system 130 additionally creates 900 files after the file system 230 downloads a change log (changelog including "inode.0" to "inode.99") as in the example of (B) in FIG. 19. In this case, the file system 130 uploads inode objects ("inode.100" to "inode.999") corresponding to the 900 created files to the object storage 400. In addition, assume that one change log is created for every 100 created files, for simple explanation. In this case, the file system 130 creates nine change logs for the 900 created files and uploads them to the object storage 400.

Then, the file system 230 downloads the nine uploaded change logs and recognizes the new 900 files created by the file system 130.

In this case, the number of operations performed for the downloading by the file system 230 is nine. That is, the file system 230 does not need to perform an operation 900 times in total for downloading the inode objects corresponding to the 900 created files, thereby greatly reducing the number of operations.

Now, it is considered that, as illustrated in the comparative example of (A) in FIG. 19, the referencing servers 200 and 300 each download the inode objects of files updated by the update server 100 separately to update the file system to the latest state. However, for the operational conditions of the object storage 400, the number of operations performed per unit time on the object storage 400 by the update server 100 and referencing servers 200 and 300 may be limited. For example, the number of operations performed per unit time on logical regions called "buckets" provided by the object storage 400 may be limited. In this case, if the inode objects of updated files are downloaded separately, the synchronization among the file systems of the servers may be delayed due to the limitation on the number of operations. This problem becomes remarkable as the number of referencing servers increases.

To deal with this, the referencing servers 200 and 300 collectively recognize updates of a plurality of files using a change log created by the update server 100. This reduces the number of operations, and also accelerates the synchronization between the file system of the update server 100 and each file system of the referencing servers 200 and 300 even in the case where a limitation is imposed on the number of operations.

By the way, in the case of updating an existing file, a change log created by the update server 100 includes a chunk map object relating to pre-update chunks and a chunk map object relating to updated chunks. Therefore, using a change log of a generation, the update server 100 is able to restore each file back to the state of the previous generation. The following describes a restoration function. First, a specific example of chunk map objects included in change logs will be described.

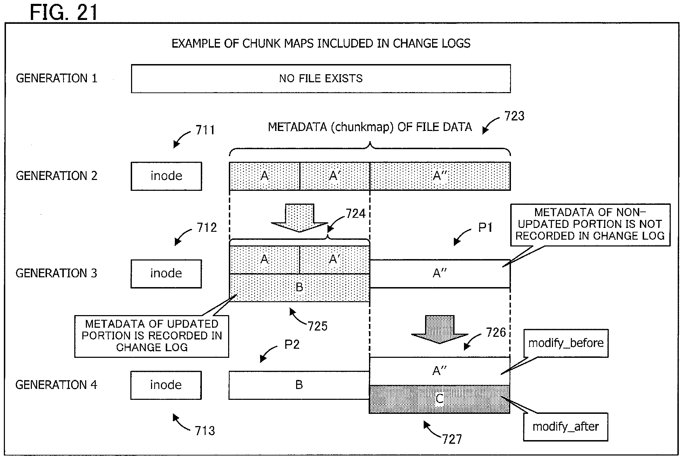

FIG. 21 illustrates an example of chunk maps included in change logs.

Now, transitions of a file over four generations 1, 2, 3, and 4 will be considered. The file does not exist in the generation 1, and the file is newly created in the generation 2. Therefore, an inode object 711 and chunk map object 723 of the file are created. The chunk map object 723 includes information indicating three chunks A, A', and A". In this case, the inode object 711 and the chunk map object 723 are registered in the createlog of a change log of the generation 2.

In the generation 3, a portion of chunks A and A' in the file is updated to a chunk B. Then, an inode object 712 of the updated file and a chunk map object (not illustrated) relating to the entire updated file are created. In this case, the inode object 711 and a chunk map object 724 are registered in the modifylog_before of the modifylog in a change log of the generation 3. The chunk map object 724 indicates the pre-update chunks A and A' corresponding to the updated portion of the file. In addition, the inode object 712 and a chunk map object 725 are registered in the modifylog_after of the modifylog in the change log of the generation 3. The chunk map object 725 indicates the updated chunk B corresponding to the updated portion of the file. On the other hand, the metadata of a non-updated portion P1 (a portion corresponding to the chunk A") of the file (this metadata is information on the portion corresponding to the non-updated potion P1 in the chunk map object of the entire file) is not registered in the change log.

In the generation 4, a portion of chunk A" in the file is updated to a chunk C. Then, an inode object 713 of the updated file and a chunk map object (not illustrated) relating to the entire updated file are created. In this case, the inode object 712 and a chunk map object 726 are registered in the modifylog_before of the modifylog in a change log of the generation 4. The chunk map object 726 indicates the pre-update chunk A" corresponding to the updated portion of the file. In addition, the inode object 713 and a chunk map object 727 are registered in the modifylog_after of the modifylog in the change log of the generation 4. The chunk map object 727 indicates an updated chunk C corresponding to the updated portion of the file. As in the case of the generation 3, the metadata of a non-updated portion P2 (a portion corresponding to the chunk B) of the file is not registered in the change log.

The greater the file size, the greater the size of a chunk map object representing the entire file. For example, if a file has a size in petabyte order, a chunk map object representing the entire file may be as large as one gigabyte. Therefore, only information about an updated portion of the file is included in a chunk map object of the change log, thereby reducing the size of the change log.

For example, the change log of the generation 4 includes information indicating the chunk A" that is the state of the generation 3 with respect to the portion of chunk C of the file. Therefore, the update server 100 is able to apply the change log of the generation 4 in reverse order to restore the file back to the state of the generation 3 from the state of the generation 4. Similarly, the change log of the generation 3 includes information indicating the chunks A and A' that are the state of the generation 2 with respect to the portion of chunk B. Therefore, the update server 100 is able to apply the change log of the generation 3 in reverse order to thereby restore the file back to the state of the generation 2 from the state of the generation 3. In short, by applying the generations 4 and 3 in this reverse order, the update server 100 is able to restore the file back to the state of the generation 2 from the state of the generation 4.

The following describes how the update server 100 performs restoration.

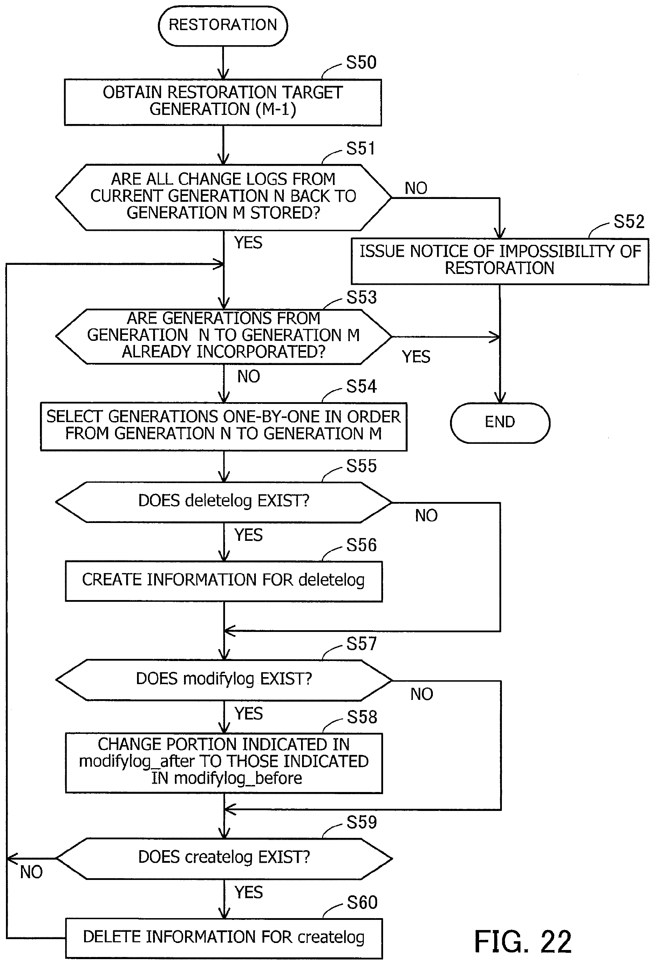

FIG. 22 is a flowchart illustrating an example of restoration.

(S50) The restoration unit 133 receives a notice of a restoration target generation (M-1) (M is an integer of one or greater). The generation 0 indicates the initial state of directories and files stored in the object storage 400. For example, the user at the update site operates the client 61 to give the notice of the restoration target generation to the update server 100.

(S51) The restoration unit 133 refers to the change logs of generations stored in the storage unit 120 to determine whether change logs of all generations from the current generation N (N is an integer greater than M) back to the generation M exist. If the change logs of all the generations from the current generation N back to the generation M exist, the process proceeds to step S53. If a change log of any one of the generations from the current generation N back to the generation M is missing, the process proceeds to step S52. Alternatively, the restoration unit 133 may inquire the object storage 400 if it stores the change logs of all generations from the current generation N back to the generation M to make a judgment of step S51. For example, the restoration unit 133 may download the change logs of the generations from the current generation N back to the generation M from the object storage 400 and execute step S53 and subsequent steps. In addition, in the case where the generation M is the current generation N, it is determined at step S51 "whether a change log of the current generation N is stored."

(S52) The restoration unit 133 issues a notice indicating that the restoration to the specified restoration target generation is not possible. For example, the restoration unit 133 notifies the client 61 requesting the restoration to the restoration target generation that the restoration is not possible. Then, the restoration process is completed.

(S53) The restoration unit 133 determines whether all change logs from the generation N to the generation M are already incorporated. If all the change logs are already incorporated, the restoration process is completed. If the change log of any generation is not yet incorporated, the process proceeds to step S54.

(S54) The restoration unit 133 selects the generations one by one in order from the generation N to the generation M (that is, in order from the most recent generation back to the past generation). The restoration unit 133 executes step S55 and subsequent steps with respect to the change log of the selected generation.

(S55) The restoration unit 133 determines whether the change log of the selected generation includes deletelog. If deletelog is found, the process proceeds to step S56. Otherwise, the process proceeds to step S57.

(S56) The restoration unit 133 creates information for the deletelog (that is, an inode object of the deleted file and a chunk map object of the entire deleted file) and sends the created information to the object storage 400.

(S57) The restoration unit 133 determines whether the change log of the selected generation includes modifylog. If modifylog is found, the process proceeds to step S58. Otherwise, the process proceeds to step S59.

(S58) The restoration unit 133 changes the chunk map object of each applicable file so as to change the portion indicated in the modifylog_after included in the change log of the selected generation to the chunks indicated in the modifylog_before. In addition, the restoration unit 133 changes the inode object indicated in the modifylog_after included in the change log of the selected generation to the inode object indicated in the modifylog_before. In the case where a plurality of updates are made to one file in one generation, the restoration unit 133 reverts the plurality of updates in order, from the more recent update (the state of the modifylog_after) to the past update (the state of the modifylog_before).

(S59) The restoration unit 133 determines whether the change log of the selected generation includes createlog. If createlog is found, the process proceeds to step S60. Otherwise, the process proceeds to step S53.

(S60) The restoration unit 133 deletes information for the createlog (that is, the inode object of the created file and the chunk map object of the entire created file) from the object storage 400. Then the process proceeds to step S53.

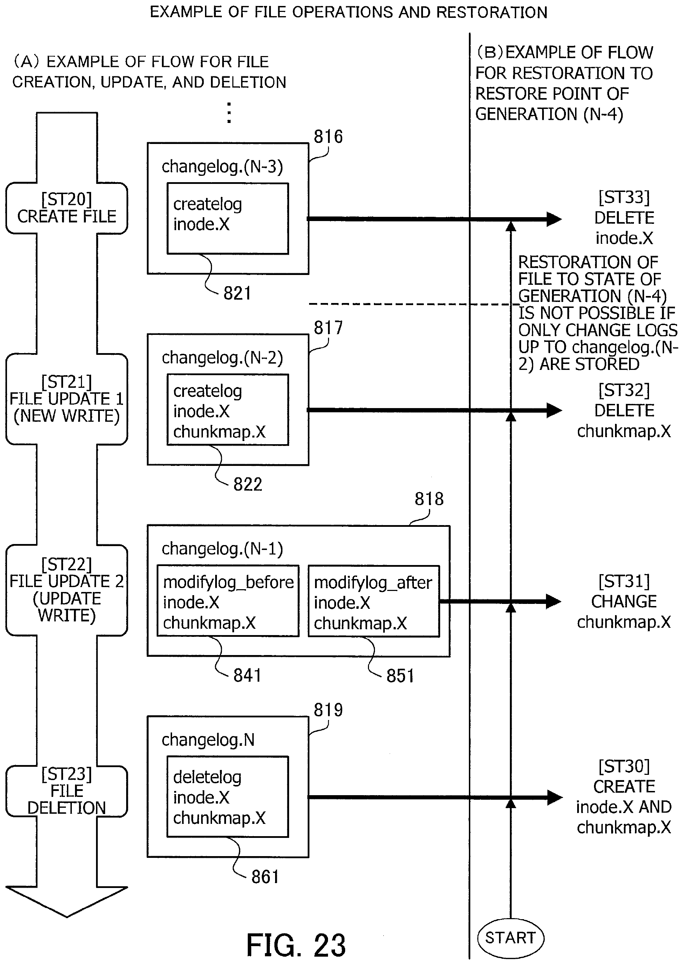

FIG. 23 illustrates an example of file operations and restoration.
(A) in FIG. 23 is an example of a flow of creation, update, and deletion of a file X. First, in a generation (N-3), the file system 130 creates the file X. The file system 130 records the creation of the file X in createlog 821 included in a change log 816 of the generation (N-3) (step ST20). At this stage, the data (data body) of the file X has not been created, and only the inode object of the file X is recorded in the createlog 821.

In the generation (N-2), the file system 130 creates the data body of the file X (new write). Then, the file system 130 records the creation of the data body of the file X in createlog 822 included in a change log 817 of the generation (N-2) (step ST21). The inode object and chunk map object of the updated file X are recorded in the createlog 822.

In the generation (N-1), the file system 130 updates a certain portion of the file X (update write). Then, the file system 130 records the update of the portion of the file X in modifylog_before 841 and modifylog_after 851 included in a change log 818 of the generation (N-1) (step ST22). The inode object of the pre-update file X and the chunk map object indicating pre-update chunks corresponding to the updated portion of the file X are recorded in the modifylog_before 841. The inode object of the updated file X and the chunk map object indicating updated chunks corresponding to the updated portion of the file X are recorded in the modifylog_after 851.

In the generation N, the file system 130 deletes the file X. Then, the file system 130 records the deletion of the file X in deletelog 861 included in a change log 819 of the generation N (step ST23). The inode object of the deleted file X and the chunk map object of the entire file X are recorded in the deletelog 861.
(B) in FIG. 23 illustrates an example of a flow for restoration to a restore point of the generation (N-4). The "restore point" indicates the state of the directories and files in the restoration target generation. In (B) of FIG. 23, the file system 130 refers to the change logs 819, 818, 817, and 816 in this order, as an example, to restore the file X back to the state of the generation (N-4). The file X is a file created in the generation (N-3), and does not exist in the stage of the generation (N-4). Therefore, to restore the file X back to the state of the generation (N-4) means deletion of the file X.

First, the file system 130 creates the inode object of the deleted file X and the chunk map object of the entire file X on the basis of the deletelog 861 of the change log 819 (step ST30). The file system 130 sends the created inode object and chunk map object to the object storage 400 (step ST30). Thereby, the file X is restored to the state of the generation (N-1).

Next, the file system 130 restores the file X to the state of generation (N-2) on the basis of the modifylog_after 851 and modifylog_before 841 of the change log 818 (step ST31). More specifically, the file system 130 changes the inode object of the file X of the generation (N-1) to the inode object of the file X of the generation (N-2) included in the modifylog_before 841. In addition, the file system 130 changes the updated portion of the chunk map object of the entire file X of the generation (N-1) to chunks indicated in the chunk map object of the file X included in the modifylog_before 841. The file system 130 informs the object storage 400 of these changes made at step ST31.

Then, the file system 130 restores the file X to the state of the generation (N-3) on the basis of the createlog 822 of the change log 817 (ST32). More specifically, the file system 130 instructs the object storage 400 to change the inode object of the file X of the generation (N-2) to the inode object of the file X of the generation (N-3) included in the createlog 822. In addition, the file system 130 instructs the object storage 400 to delete the chunk map object of the file X.

Then, the file system 130 restores the file X to the state of the generation (N-4) on the basis of the createlog 821 of the change log 816 (step ST33). More specifically, the file system 130 instructs the object storage 400 to delete the inode object of the file X.

The file system 130 is able to restore another file back to the state of a past generation on the basis of change logs in the same manner. However, restorable generations are limited according to the generations of stored change logs. In the example of (B) in FIG. 23, if only change logs of the generations N to (N-2) are stored, the states of generations up to the generation (N-3) are restorable, but the state of the generation (N-4) is not restorable.

As described above, the update server 100 is able to restore the state of a desired past generation on the basis of change logs, without separately obtaining backups of the object storage 400.

Note that the information processing of the first embodiment may be implemented by causing the processing unit 12 or 22 to execute programs. In addition, the information processing of the second embodiment may be implemented by causing the CPU 101 to execute programs. Such programs may be recorded in the computer-readable recording medium 113.

For example, recording media 113 on which the programs are recorded are put on sale, thereby making it possible to distribute the programs. In addition, the programs may be stored in another computer and then be distributed over a network. The computer stores (installs) the programs recorded on the recording medium 113 or the programs received from the other computer, in a local storage device, such as the RAM 102 or HDD 103, and then reads the programs from the storage device and runs the programs.

According to one aspect, it is possible to reduce the number of operations.

## Claims

1. An information processing system for dividing a plurality of files into chunks, deduplicating the chunks, and storing the deduplicated chunks in a storage device (40), the information processing system comprising:
a first information processing apparatus (10) configured to
record, each time a file is updated, attribute information of the updated file and map information indicating an updated chunk of the updated file, so as to create a change log indicating updates of a plurality of files,
set information indicating a generation for the change log, and
send the change log to a management apparatus (30) connected to the storage device (40); and
a second information processing apparatus (20) configured to
obtain the change log from the management apparatus (30), and
recognize the plurality of files updated, with reference to the change log in order of generation.

2. The information processing system according to claim 1, wherein:
the second information processing apparatus (20) includes a file system that refers to the plurality of files; and
the second information processing apparatus (20) is further configured to incorporate the updates of the plurality of files in the file system according to the change log.

3. The information processing system according to claim 1, wherein the second information processing apparatus (20) is further configured to
obtain a list of generations of change logs stored in the management apparatus (30) from the management apparatus (30), and
determine a generation for obtaining the change log corresponding to the determined generation from the management apparatus (30), based on the list and generations of change logs already incorporated in the second information processing apparatus (20).

4. The information processing system according to claim 1, wherein, upon detecting that there is a generation missing between generations of change logs stored in the management apparatus (30) and generations of change logs already incorporated in the second information processing apparatus (20), the second information processing apparatus (20) is further configured to obtain, with respect to each of the plurality of files, attribute information of the each of the plurality of files and information indicating all chunks belonging to the each of the plurality of files from the management apparatus (30).

5. The information processing system according to claim 1, wherein the first information processing apparatus (10) is further configured to store only information indicating a chunk corresponding to an updated portion of the updated file in the map information.

6. The information processing system according to claim 1, wherein the first information processing apparatus (10) is further configured to
store, in the map information, information indicating a pre-update chunk corresponding to an updated portion of the updated file and information indicating the updated chunk corresponding to the updated portion, and
upon receiving a notice of a restoration target generation, restore, based on change logs of a plurality of generations, the plurality of files to states of the plurality of generations one by one in reverse order of generation from a current generation, so as to restore the plurality of files to a state of the restoration target generation.

7. The information processing system according to claim 1, wherein the first information processing apparatus (10) and the second information processing apparatus (20) perform no communication with each other.

8. The information processing system according to claim 1, wherein the updates of the plurality of files include creation of a new file, an update of an existing file, and deletion of an existing file.

9. An information processing apparatus used in an information processing system (1) for dividing a plurality of files into chunks, deduplicating the chunks, and storing the deduplicated chunks in a storage device (40), the information processing apparatus comprising:
a storage unit (11) configured to store therein a change log indicating updates of the plurality of files; and
a processing unit (12) configured to
record, each time a file is updated, attribute information of the updated file and map information indicating an updated chunk of the updated file, so as to create the change log,
set information indicating a generation for the change log, and
send the change log to a management apparatus (30) connected to the storage device (40).

10. A computer program that causes a computer used in an information processing system (1) for dividing a plurality of files into chunks, deduplicating the chunks, and storing the deduplicated chunks in a storage device (40) to execute a process comprising:
recording, each time a file is updated, attribute information of the updated file and map information indicating an updated chunk of the updated file, so as to create a change log indicating updates of the plurality of files, and setting information indicating a generation for the change log; and
sending the change log to a management apparatus (30) connected to the storage device (40).
